# EUROPEAN PATENT APPLICATION

(11) **EP 4 586 197 A1**
(43) Date of publication of application: **16.07.2025**
(21) Application number: 23862993.5
(22) Date of filing: 28.08.2023
(51) Int. Cl.: G06T 9/40

(54) **DECODING METHOD, ENCODING METHOD, DECODING DEVICE, AND ENCODING DEVICE**

(30) Priority: 09.09.2022 US 202263405093 P; 11.04.2023 US 202363458490 P
(71) Applicant: Panasonic Intellectual Property Corporation of America, Torrance, CA 90504 (US)
(72) Inventor: ITO, Atsushi, Kadoma-shi, Osaka 571-0057 (JP); SUGIO, Toshiyasu, Kadoma-shi, Osaka 571-0057 (JP); IGUCHI, Noritaka, Kadoma-shi, Osaka 571-0057 (JP); NISHI, Takahiro, Kadoma-shi, Osaka 571-0057 (JP)
(74) Representative: Grünecker Patent- und Rechtsanwälte PartG mbB
(86) International application number: PCT/JP2023/030974
(87) International publication number: WO 2024/053454

(57) **Abstract**

A decoding method is a decoding method for decoding three-dimensional points, and includes: generating a first vertex on a first surface of a first node, at a position other than an edge of the first node (S301); generating second vertices at edges of the first node (S302); generating a third vertex within the first node, based on the second vertices (S303); generating, within the first node, a triangle defined by the first vertex, a second vertex among the second vertices, and the third vertex (S304); and generating the three-dimensional points on a surface of the triangle (S305).

## Description

### [Technical Field]

The present disclosure relates to a decoding method, an encoding method, a decoding device, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

Furthermore, as an encoding scheme, there are cases where an irreversible compression scheme is used. In such a case, the decoded point cloud does not perfectly match the original point cloud. Therefore, there is a demand for improving the reproducibility of a point cloud to be decoded.

The present disclosure has an object to provide a decoding method, an encoding method, a decoding device, or an encoding device capable of improving reproducibility of a point cloud to be decoded.

### [Solution to Problem]

A decoding method according to an aspect of the present disclosure is a decoding method for decoding three-dimensional points, and includes: generating a first vertex on a first surface of a first node, at a position other than an edge of the first node; generating second vertices at edges of the first node; generating a third vertex within the first node, based on the second vertices; generating, within the first node, a triangle defined by the first vertex, a second vertex among the second vertices, and the third vertex; and generating the three-dimensional points on a surface of the triangle.

An encoding method according to an aspect of the present disclosure is an encoding method for encoding three-dimensional points, and includes: generating a first vertex on a first surface of a first node, at a position other than an edge of the first node; generating second vertices at edges of the first node; generating a third vertex within the first node, based on the second vertices; and storing information on the first vertex, the second vertices, and the third vertex in a bitstream, wherein the first vertex, the second vertices, and the third vertex are generated to generate, within the first node, a triangle defined by the first vertex, a second vertex among the second vertices, and the third vertex, and the three-dimensional points are approximated with the triangle.

### [Advantageous Effects of Invention]

The present disclosure can provide a decoding method, an encoding method, a decoding device, or an encoding device capable of improving reproducibility of a point cloud to be decoded.

### [Brief Description of Drawings]

[FIG. 1]

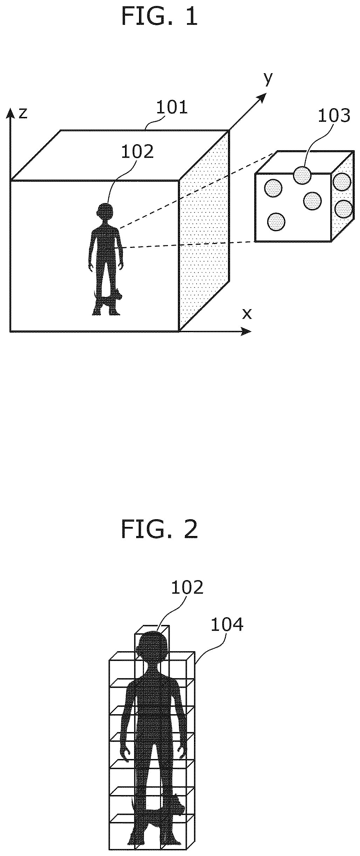

   FIG. 1 is a diagram illustrating an example of an original point cloud according to an embodiment.
[FIG. 2]
   FIG. 2 is a diagram illustrating an example of a trimmed octree according to the embodiment.
[FIG. 3]

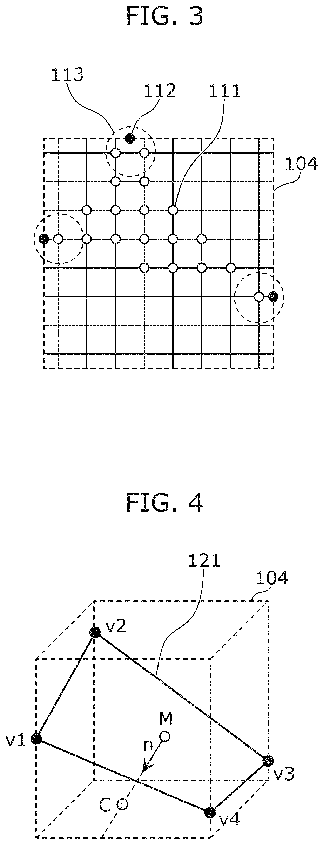

   FIG. 3 is a diagram illustrating an example in which a leaf-node according to the embodiment is two-dimensionally displayed.
[FIG. 4]
   FIG. 4 is a diagram for describing a method for generating a centroid vertex according to the embodiment.
[FIG. 5]

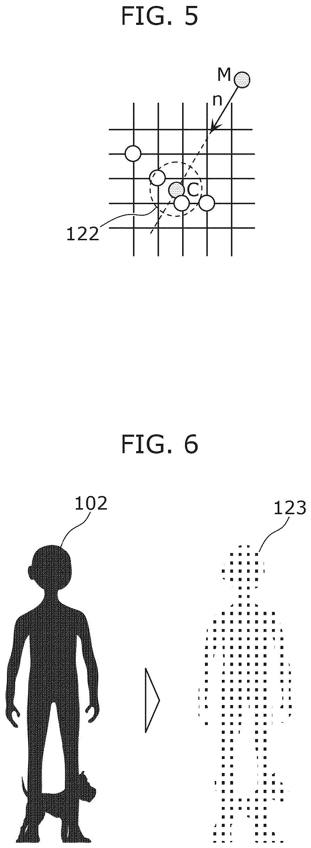

   FIG. 5 is a diagram for describing the method for generating a centroid vertex according to the embodiment.
[FIG. 6]
   FIG. 6 is a diagram illustrating an example of vertex information according to the embodiment.
[FIG. 7]

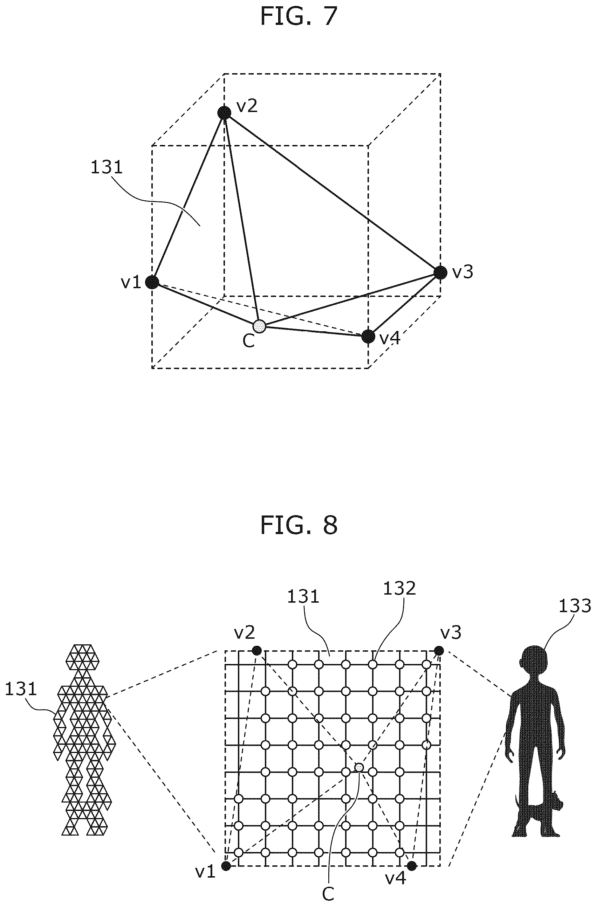

   FIG. 7 is a diagram illustrating an example of a TriSoup surface according to the embodiment.
[FIG. 8]
   FIG. 8 is a diagram for describing point cloud reconstruction processing according to the embodiment.
[FIG. 9]

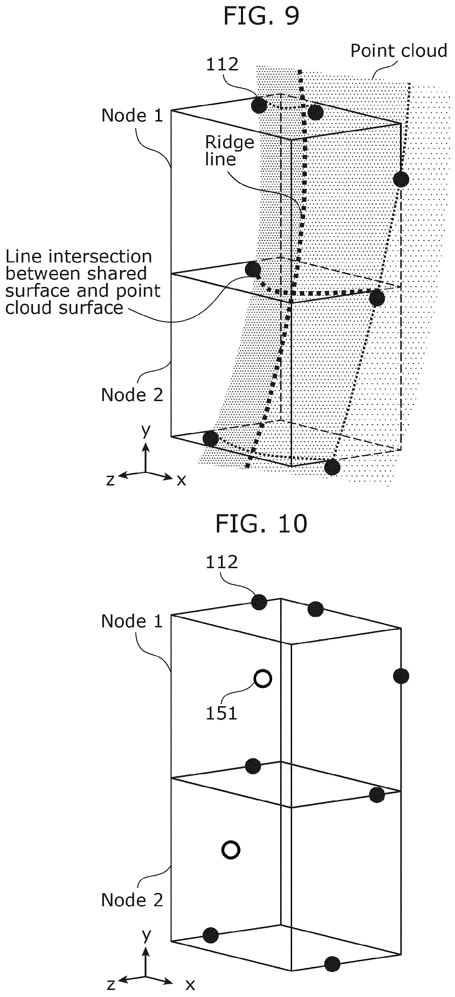

   FIG. 9 is a diagram illustrating an example of a point cloud according to the embodiment.
[FIG. 10]
   FIG. 10 is a diagram illustrating an example of centroid vertex generation according to the embodiment.
[FIG. 11]

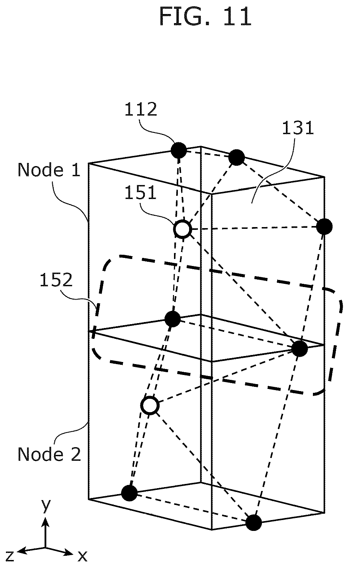

   FIG. 11 is a diagram illustrating an example of triangle (TriSoup surface) generation according to the embodiment.
[FIG. 12]

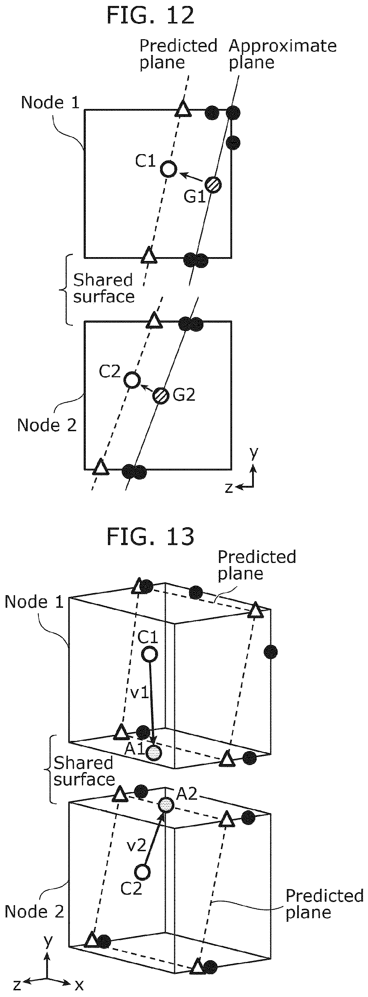

   FIG. 12 is a diagram illustrating cross-sections of nodes according to the embodiment.
[FIG. 13]
   FIG. 13 is a diagram illustrating an example of tentative vertex generation according to the embodiment.
[FIG. 14]

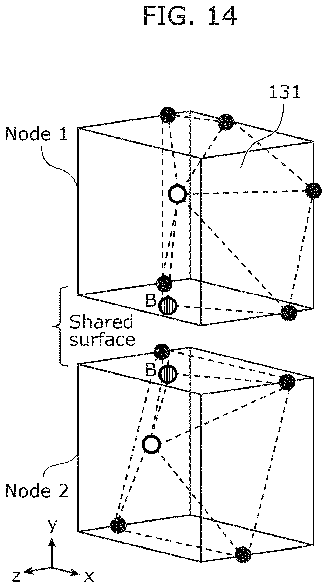

   FIG. 14 is a diagram illustrating an example of face vertex generation according to the embodiment.
[FIG. 15]

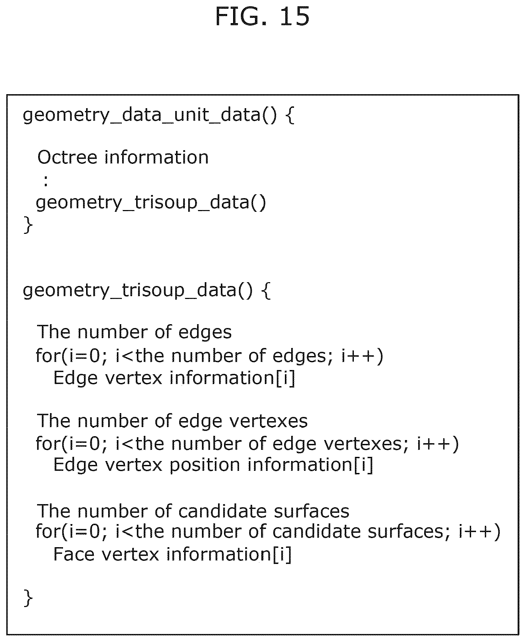

   FIG. 15 is a diagram illustrating an example of a syntax of GDU according to the embodiment.
[FIG. 16]

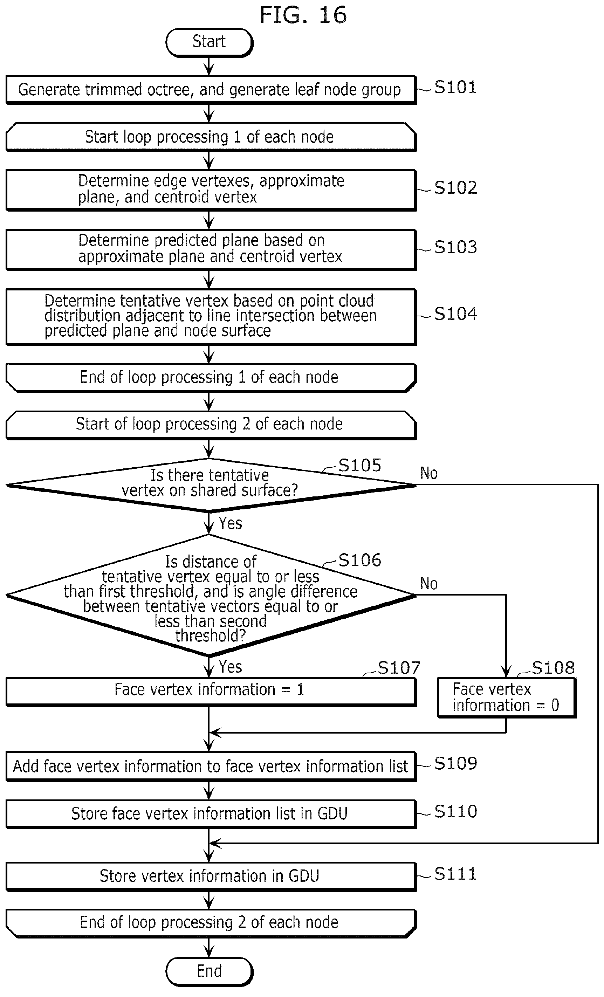

   FIG. 16 is a flowchart of encoding processing according to the embodiment.
[FIG. 17]

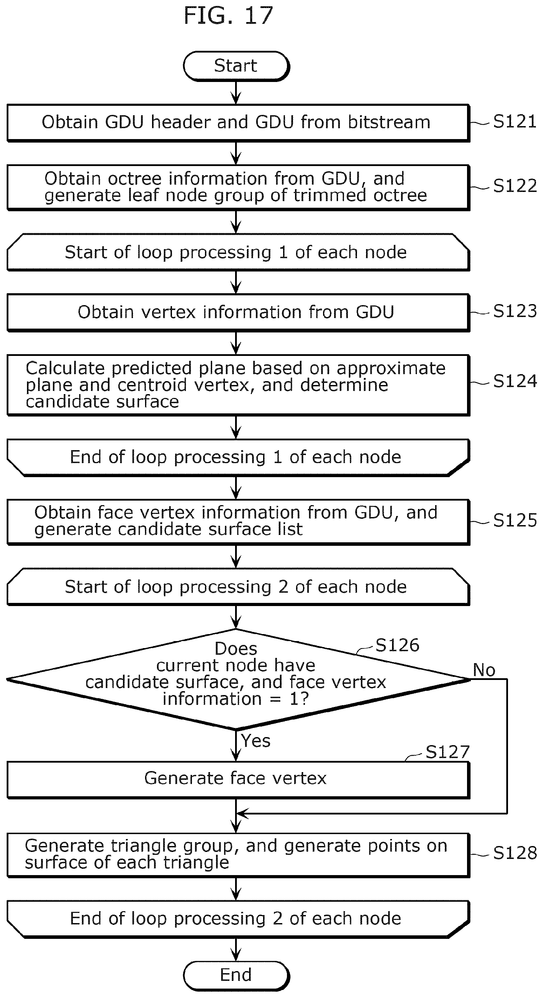

   FIG. 17 is a flowchart of decoding processing according to the embodiment.
[FIG. 18]

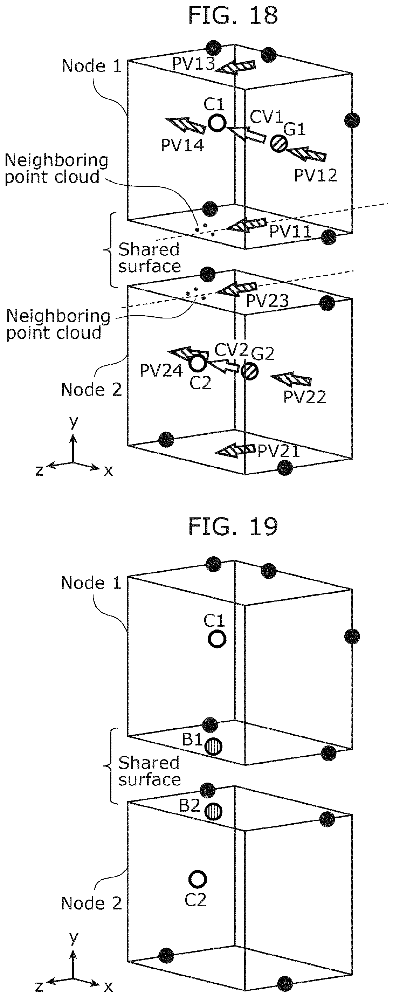

   FIG. 18 is a diagram for describing Variation 1 of a face vertex generation method according to the embodiment.
[FIG. 19]
   FIG. 19 is a diagram for describing Variation 1 of a face vertex generation method according to the embodiment.
[FIG. 20]

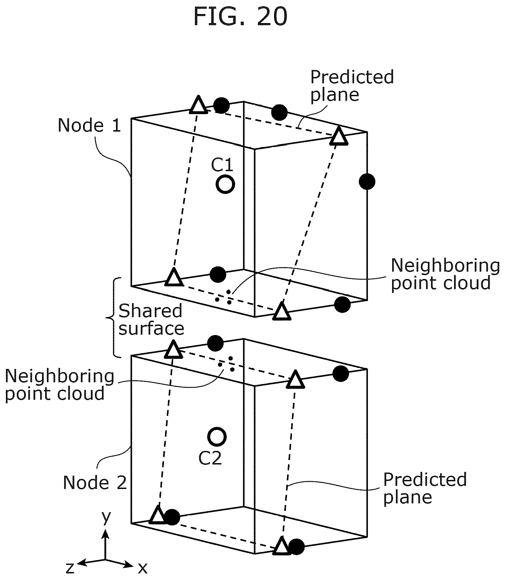

   FIG. 20 is a diagram for describing Variation 2 of a face vertex generation method according to the embodiment.
[FIG. 21]

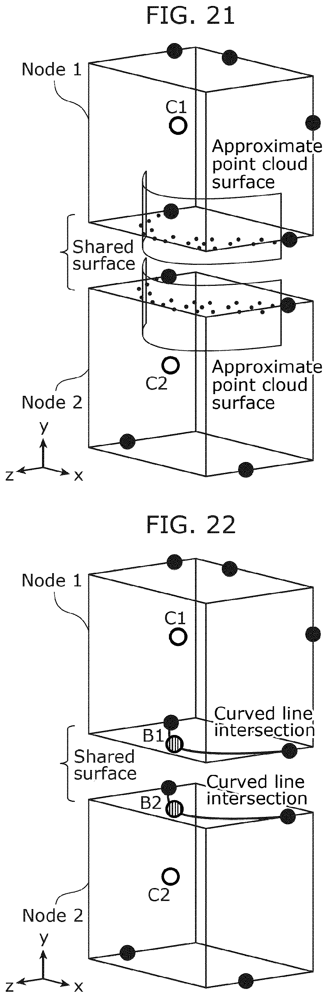

   FIG. 21 is a diagram for describing Variation 3 of a face vertex generation method according to the embodiment.
[FIG. 22]
   FIG. 22 is a diagram for describing Variation 3 of a face vertex generation method according to the embodiment.
[FIG. 23]

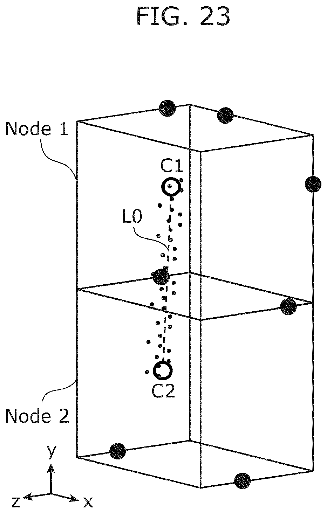

   FIG. 23 is a diagram for describing Variation 4 of a face vertex generation method according to the embodiment.
[FIG. 24]

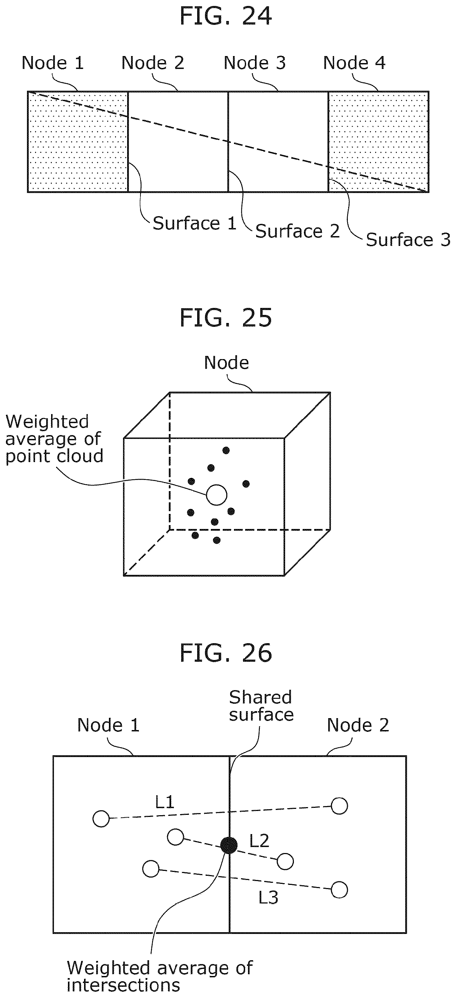

   FIG. 24 is a diagram illustrating an example of surfaces of nodes present between two nodes, according to the embodiment.
[FIG. 25]
   FIG. 25 is a diagram illustrating an example of a weighted average position of a point cloud according to the embodiment.
[FIG. 26]
   FIG. 26 is a diagram illustrating an example of a weighted average position of intersections according to the embodiment.
[FIG. 27]

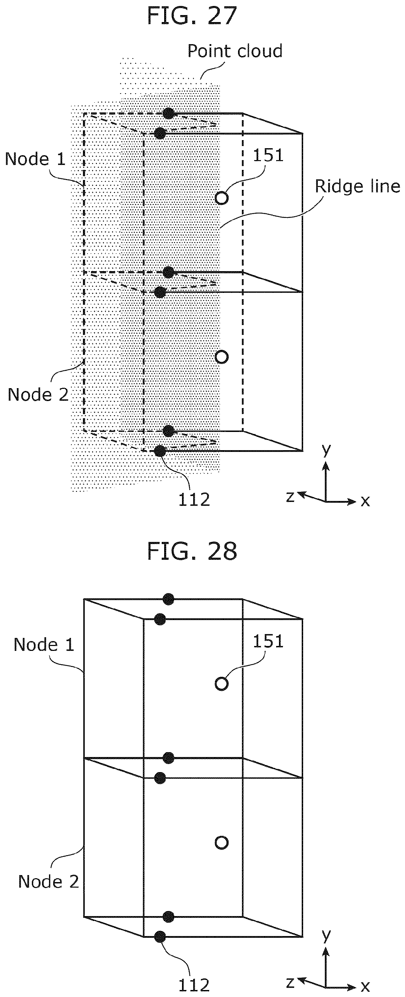

   FIG. 27 is a diagram illustrating an example of a point cloud according to the embodiment.
[FIG. 28]
   FIG. 28 is a diagram illustrating an example of centroid vertex generation according to the embodiment.
[FIG. 29]

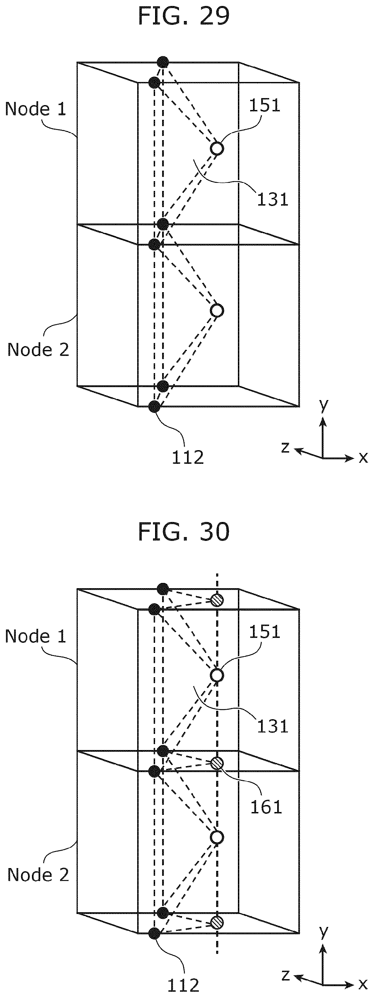

   FIG. 29 is a diagram illustrating an example of triangle (TriSoup surface) generation according to the embodiment.
[FIG. 30]
   FIG. 30 is a diagram illustrating an example of face vertex generation according to the embodiment.
[FIG. 31]

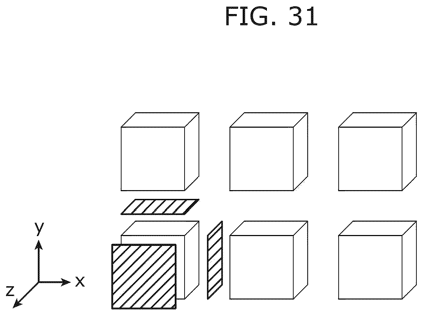

   FIG. 31 is a diagram illustrating an example of surfaces about which the connectivity evaluation and reconstruction of the centroid vertex are performed according to the embodiment.
[FIG. 32]

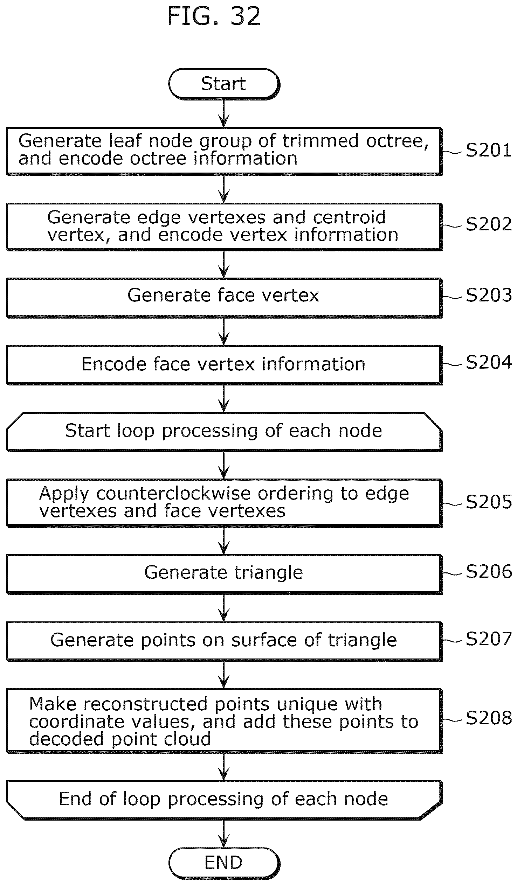

   FIG. 32 is a flowchart of encoding processing according to the embodiment.
[FIG. 33]

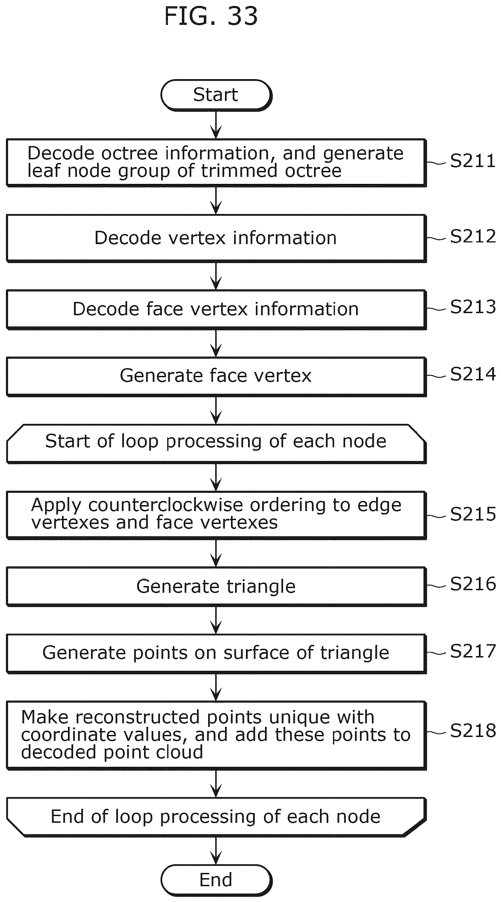

   FIG. 33 is a flowchart of decoding processing according to the embodiment.
[FIG. 34]

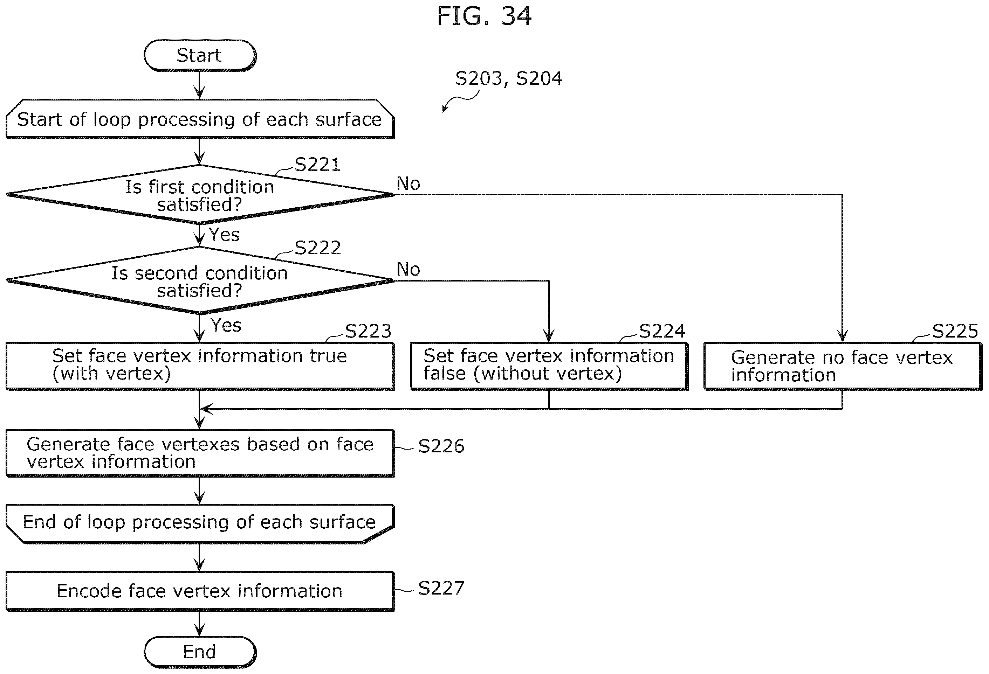

   FIG. 34 is a flowchart of propagation processing of face vertex information according to the embodiment.
[FIG. 35]

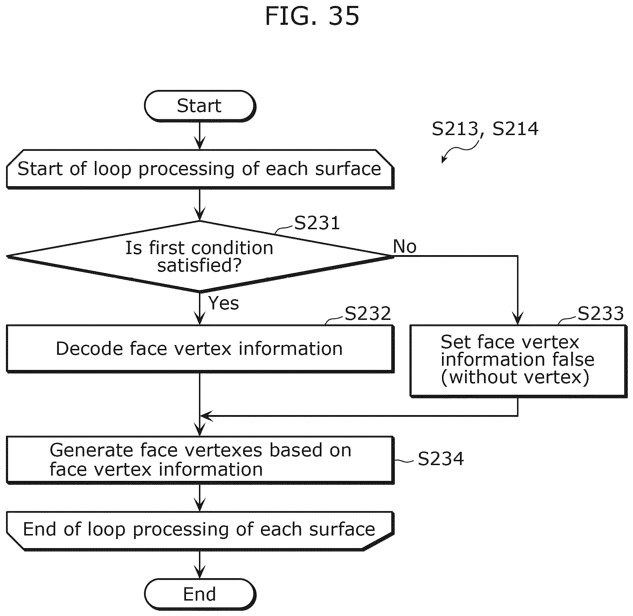

   FIG. 35 is a flowchart of decoding processing of face vertex information according to the embodiment.
[FIG. 36]

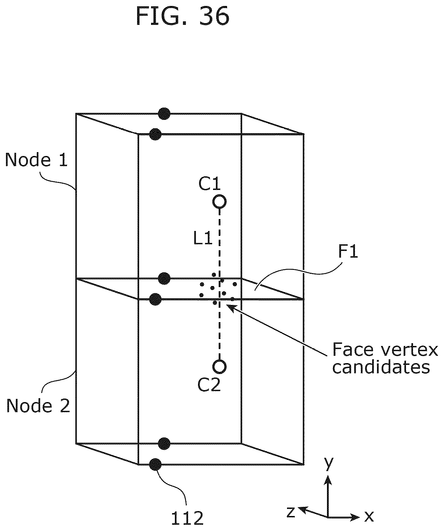

   FIG. 36 is a diagram illustrating an example of a face vertex candidate according to the embodiment.
[FIG. 37]

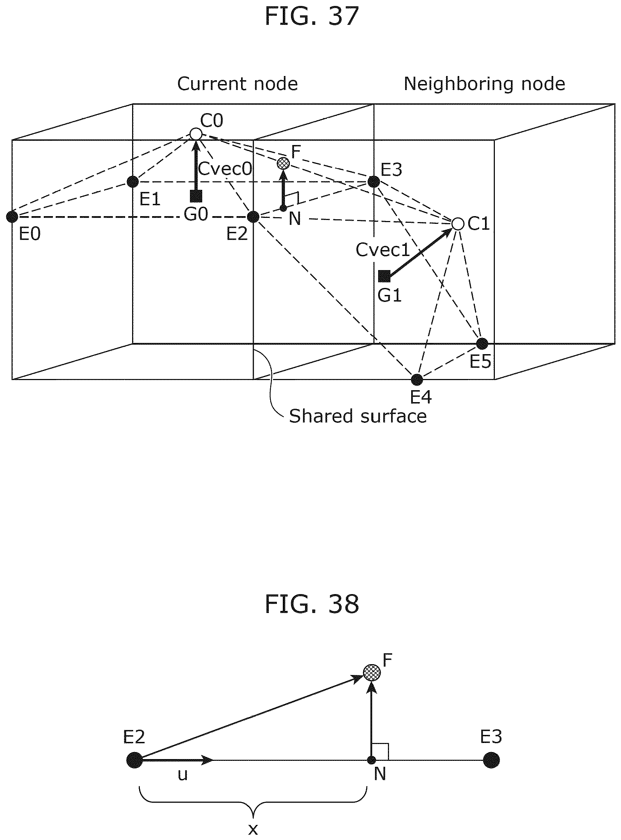

   FIG. 37 is a diagram illustrating an example arrangement of a vertex group according to the embodiment.
[FIG. 38]
   FIG. 38 is a diagram illustrating vector NF according to the embodiment.
[FIG. 39]

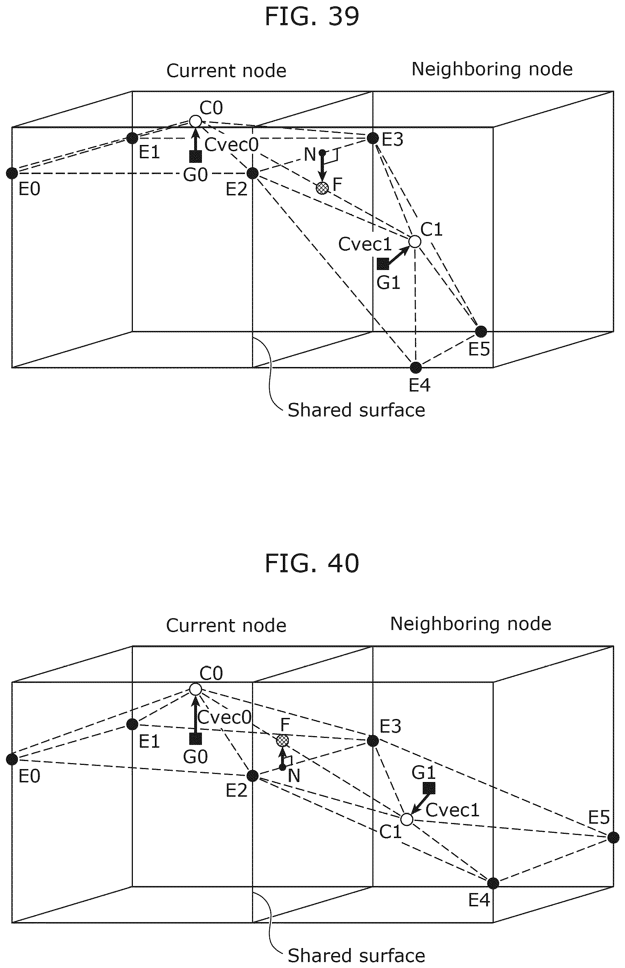

   FIG. 39 is a diagram illustrating an example arrangement of a vertex group according to the embodiment.
[FIG. 40]
   FIG. 40 is a diagram illustrating an example arrangement of a vertex group according to the embodiment.
[FIG. 41]

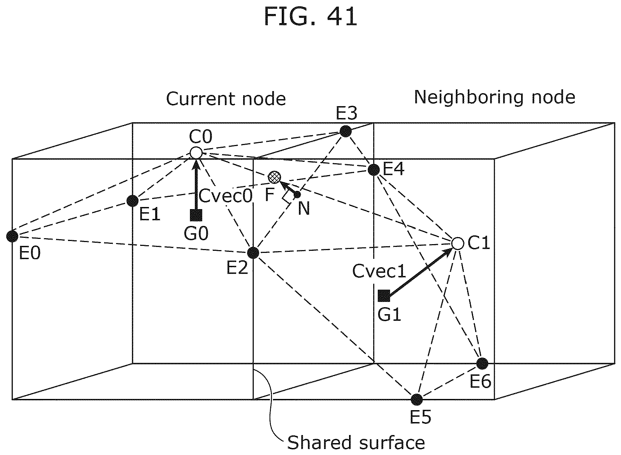

   FIG. 41 is a diagram illustrating an example arrangement of a vertex group according to the embodiment.
[FIG. 42]

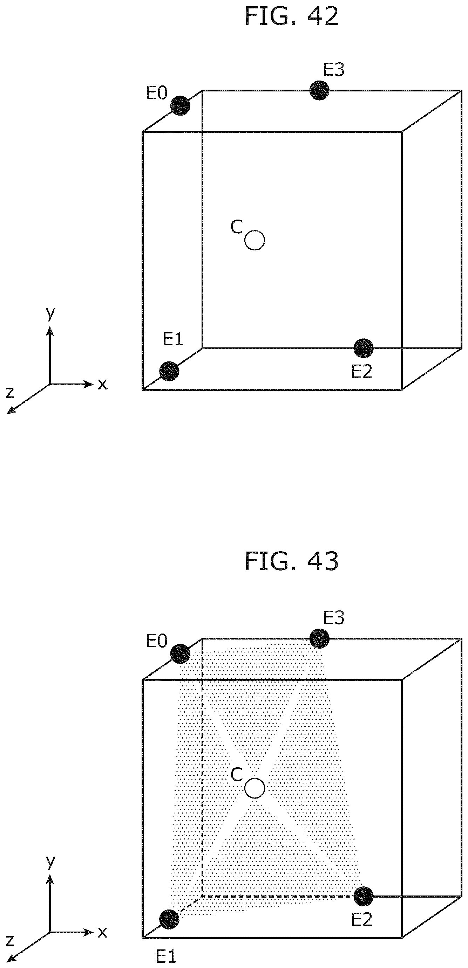

   FIG. 42 is a diagram illustrating an example edge vertices and a centroid vertex according to the embodiment.
[FIG. 43]
   FIG. 43 is a diagram illustrating an example of correctly generated triangles according to the embodiment.
[FIG. 44]

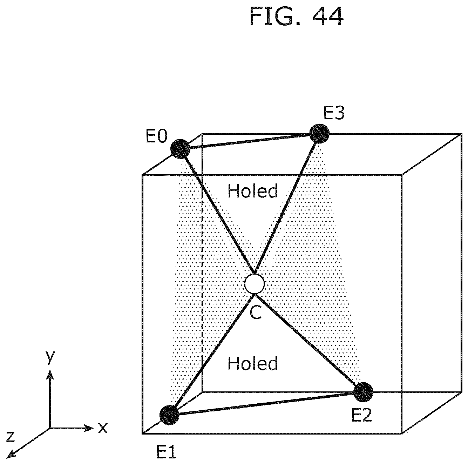

   FIG. 44 is a diagram illustrating an example of incorrectly generated triangles according to the embodiment.
[FIG. 45]

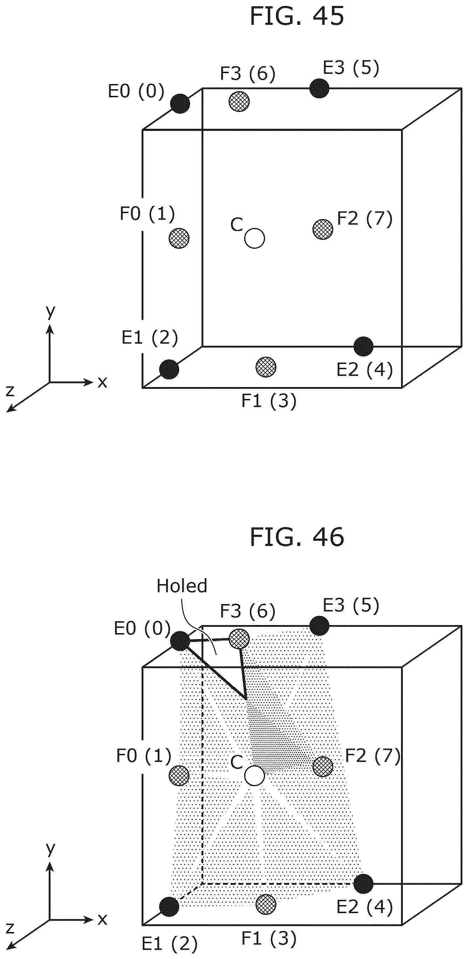

   FIG. 45 is a diagram illustrating an example of edge vertices, a centroid vertex, and face vertices according to the embodiment.
[FIG. 46]
   FIG. 46 is a diagram illustrating an example of triangle generation in a case where simple ordering according to the embodiment is applied.
[FIG. 47]

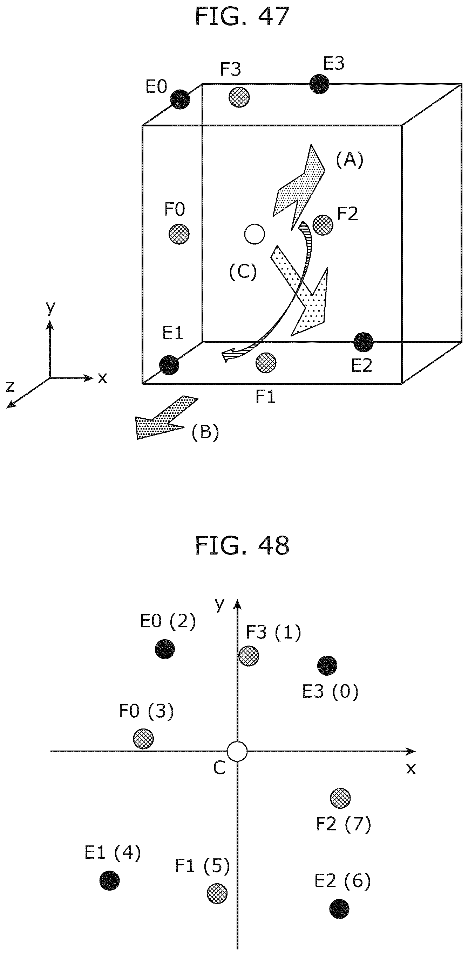

   FIG. 47 is a diagram for describing ordering processing according to the embodiment.
[FIG. 48]
   FIG. 48 is a diagram for describing ordering processing according to the embodiment.
[FIG. 49]

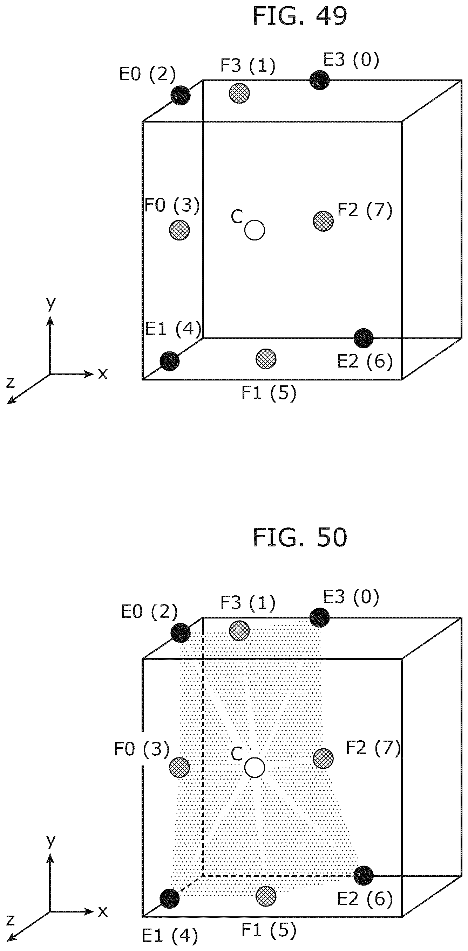

   FIG. 49 is a diagram for describing ordering processing according to the embodiment.
[FIG. 50]
   FIG. 50 is a diagram for describing ordering processing according to the embodiment.
[FIG. 51]

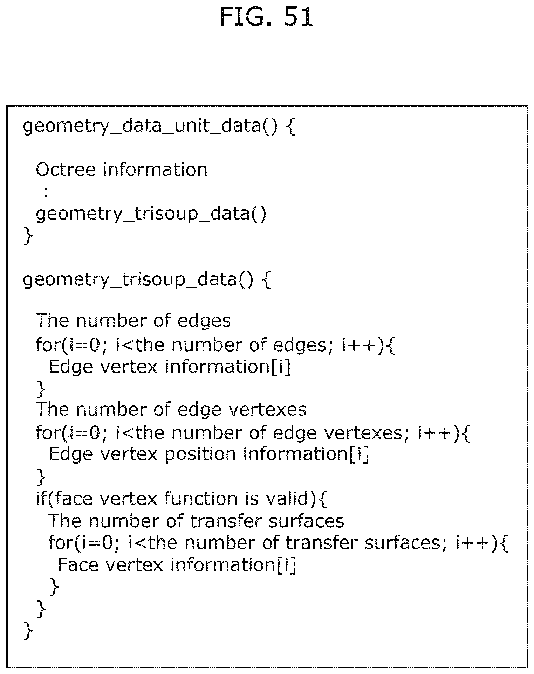

   FIG. 51 is a diagram illustrating an example of a syntax of GDU according to the embodiment.
[FIG. 52]

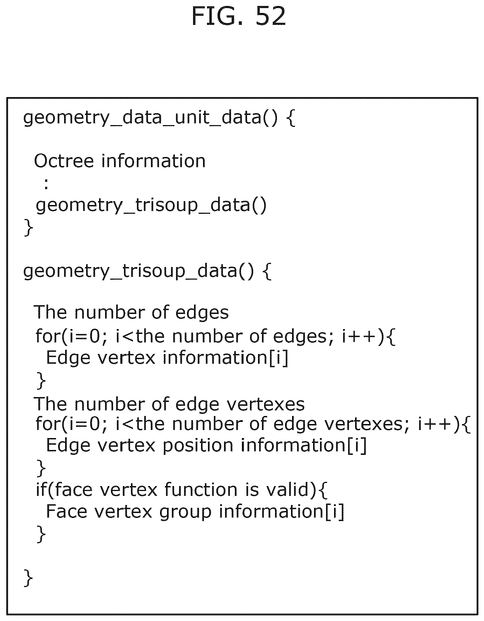

   FIG. 52 is a diagram illustrating a variation of a syntax of GDU according to the embodiment.
[FIG. 53]

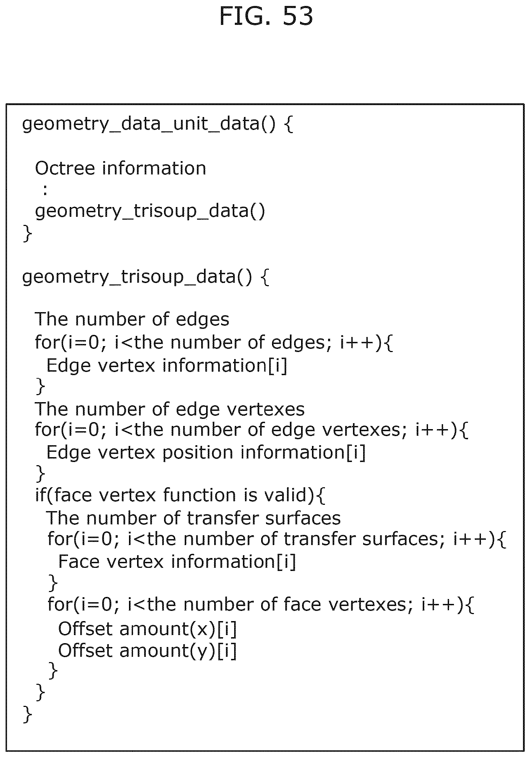

   FIG. 53 is a diagram illustrating a variation of a syntax of GDU according to the embodiment.
[FIG. 54]

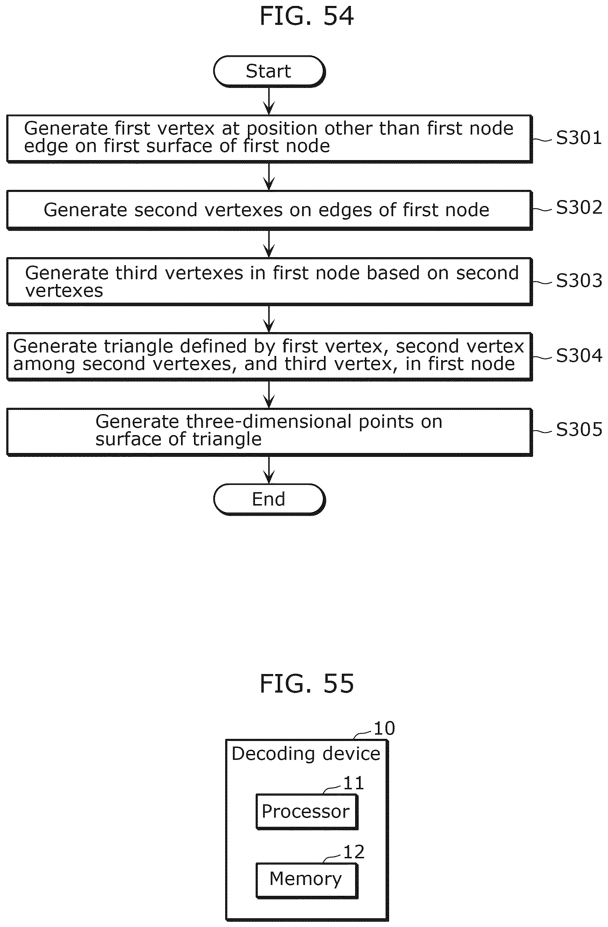

   FIG. 54 is a flowchart of decoding processing according to the embodiment.
[FIG. 55]
   FIG. 55 is a block diagram of a decoding device according to the embodiment.
[FIG. 56]

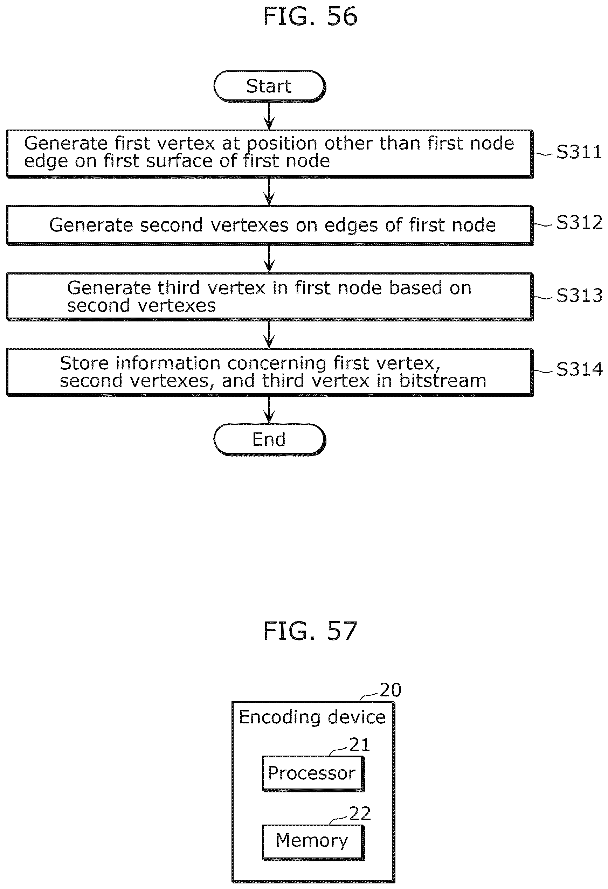

   FIG. 56 is a flowchart of encoding processing according to the embodiment.
[FIG. 57]
   FIG. 57 is a block diagram of an encoding device according to the embodiment.

### [Description of Embodiments]

A decoding method according to an aspect of the present disclosure is a decoding method for decoding three-dimensional points, and includes: generating a first vertex on a first surface of a first node, at a position other than an edge of the first node; generating second vertices at edges of the first node; generating a third vertex within the first node, based on the second vertices; generating, within the first node, a triangle defined by the first vertex, a second vertex among the second vertices, and the third vertex; and generating the three-dimensional points on a surface of the triangle. Accordingly, a decoding device can generate the first vertex at a position other than an edge on a surface of a node, and generate a triangle using the first vertex. Accordingly, since a triangle that passes a position other than the edge of the node can be generated, it is possible to improve the reproducibility of the shape of the original point cloud in the decoded point cloud.

For example, the first surface may be a surface common between the first node and a second node adjacent to the first node, and the first vertex may represent three-dimensional points located in a vicinity of the first surface in the first node and the second node. Accordingly, by generating a triangle using the first vertex, it is possible to improve the reproducibility of the three-dimensional clouds located in the vicinity of the first surface, in the decoded point cloud.

For example, the first vertex may be disposed on the first surface of the first node, based on a position of the third vertex in the first node and a position of a third vertex in a second node adjacent to the first node. Accordingly, for example, the reproducibility of the shape of the original point cloud distributed between two second vertices can be improved.

For example, the first surface may be a surface common between the first node and a second node adjacent to the first node. For example, the decoding method may further include: generating fourth vertices at edges of the second node; generating a fifth vertex within the second node, based on the fourth vertices. For example, the first vertex may be generated based on information indicating that the third vertex is connected to the fifth vertex. Accordingly, for example, when a ridge line is formed straddling a node boundary, it is possible to improve the reproducibility of the shape of the ridge line in the decoded point cloud.

For example, the information may be provided for each of three mutually orthogonal surfaces of the first node. Accordingly, it is possible to control whether to generate the first vertex for each surface.

For example, the first vertex may be generated based on information provided for each of three mutually orthogonal surfaces of the first node, the information indicating whether a vertex is present at a position other than an edge on the surface. Accordingly, it is possible to control whether to generate the first vertex in three surfaces of a node.

For example, the decoding method may further include: receiving a bitstream including the information. Accordingly, the decoding device can determine whether to generate the first vertex, by using information included in the bitstream. Therefore, since the decoding device does not need to perform the determining based on another condition, etc., the processing amount of the decoding device can be reduced.

For example, the information may include position information of the first vertex. Accordingly, the decoding device can generate the first vertex at any position, based on the information. Accordingly, the degree of freedom for the position at which to generate the first vertex is improved.

For example, the first vertex may represent the three-dimensional points inside the first node and other three-dimensional points inside an other node. Accordingly, the first vertex enables reproduction of, not only the three-dimensional points inside the first node, but also three-dimensional points inside another node. Accordingly, it is possible to improve the reproducibility of the shape of the original point cloud in the decoded point cloud.

For example, the first vertex may be located apart from a line connecting two of the second vertices on the first surface, by a predetermined distance or more. Accordingly, a shape that cannot be reproduced using the second vertex can be reproduced using the first vertex. Accordingly, it is possible to improve the reproducibility of the shape of the original point cloud in the decoded point cloud.

For example, the decoding method may further include: receiving a bitstream including information indicating, for each surface satisfying a predetermined condition among surfaces of the first node, whether the first vertex is to be generated on the surface. Accordingly, the data amount of information to be stored in the bitstream can be reduced.

For example, the first surface may be a surface common between the first node and a second node adjacent to the first node. For example, the decoding method may further include: generating fourth vertices at edges of the second node; and generating a fifth vertex within the second node, based on the fourth vertices. For example, the predetermined condition may include at least one of: a first condition that the surface includes two or three of the second vertices; or a second condition that a first vector, a second vector, and a third vector face a same direction. For example, the first vector may be a vector from a first center of balance of the second vertices to the third vertex, the second vector may be a vector from a second center of balance of the fourth vertices to the fifth vertex, and the third vector may be a vector from a first line connecting two of the second vertices on the first surface to a tentative first vertex, the tentative first vertex being provided at a position at which a second line connecting the third vertex and the fifth vertex intersects the first surface. Accordingly, in a case where there is a low possibility that reproducibility will be improved by generating the first vertex, the transfer of information on the first vertex can be omitted.

For example, the generating of the triangle may include: ordering the first vertex and the second vertices by calculating arctangents of the first vertex and the second vertices in a state in which a viewpoint is facing an annular distribution including the first vertex and the second vertices; and selecting two vertices from among the first vertex and the second vertices based on a result of the ordering, and generating the triangle including the two vertices selected and the third vertex. Accordingly, the decoding device can appropriately generate a triangle in a case where the first vertex is to be used.

An encoding method according to an aspect of the present disclosure is an encoding method for encoding three-dimensional points, and includes: generating a first vertex on a first surface of a first node, at a position other than an edge of the first node; generating second vertices at edges of the first node; generating a third vertex within the first node, based on the second vertices; and storing information on the first vertex, the second vertices, and the third vertex in a bitstream. The first vertex, the second vertices, and the third vertex are generated to generate, within the first node, a triangle defined by the first vertex, a second vertex among the second vertices, and the third vertex, and the three-dimensional points are approximated with the triangle. Accordingly, for example, the decoding device can generate the first vertex at a position other than an edge on a surface of a node by using information included in the bitstream, and generate a triangle using the first vertex. Accordingly, since a triangle that passes a position other than the edge of the node can be generated, it is possible to improve the reproducibility of the shape of the original point cloud in the decoded point cloud.

For example, the first surface may be a surface common between the first node and a second node adjacent to the first node, and the first vertex may be generated based on the three-dimensional points inside the first node and three-dimensional points inside the second node. Accordingly, since the first vertex can be generated based on the three-dimensional points inside the first node and the second node, it is possible to improve the reproducibility of the shape of the original point cloud in the decoded point cloud.

For example, the first vertex may be generated based on a plane or a curved surface within the first node and a plane or a curved surface within the second node. Accordingly, since the first vertex is generated based on the distribution of three-dimensional points inside the first node and the second node, it is possible to improve the reproducibility of the shape of the original point cloud in the decoded point cloud.

For example, the encoding method may further include: generating fourth vertices at edges of the second node; and generating a fifth vertex within the second node, based on the fourth vertices. For example, the generating of the first vertex may include: shifting the plane or the curved surface within the first node toward the third vertex; shifting the plane or the curved surface within the second node toward the fifth vertex; and generating the first vertex based on the plane shifted or the curved surface shifted within the first node and the plane shifted or the curved surface shifted within the second node. Accordingly, since the first vertex is generated based on the distribution of three-dimensional points inside the first node and the second node, it is possible to improve the reproducibility of the shape of the original point cloud in the decoded point cloud.

For example, the plane shifted or the curved surface shifted within the first node may pass the third vertex, and the plane shifted or the curved surface shifted within the second node may pass the fifth vertex. Accordingly, since the first vertex is generated based on the distribution of three-dimensional points inside the first node and the second node, it is possible to improve the reproducibility of the shape of the original point cloud in the decoded point cloud.

A decoding device according to an aspect of the present disclosure is a decoding device that decodes three-dimensional points, and includes: a processor; and memory. Using the memory, the processor: generates a first vertex on a first surface of a first node, at a position other than an edge of the first node; generates second vertices at edges of the first node; generates a third vertex within the first node, based on the second vertices; generates, within the first node, a triangle defined by the first vertex, a second vertex among the second vertices, and the third vertex; and generates the three-dimensional points on a surface of the triangle.

An encoding device according to an aspect of the present disclosure is an encoding device that encodes three-dimensional points, and includes: a processor; and memory. Using the memory, the processor: generates a first vertex on a first surface of a first node, at a position other than an edge of the first node; generates second vertices at edges of the first node; generates a third vertex within the first node, based on the second vertices; and stores information on the first vertex, the second vertices, and the third vertex in a bitstream. The first vertex, the second vertices, and the third vertex are generated to generate, within the first node, a triangle defined by the first vertex, a second vertex among the second vertices, and the third vertex. The three-dimensional points are approximated with the triangle.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT]

Hereinafter, an encoding device (three-dimensional data encoding device) and a decoding device (three-dimensional data decoding device) according to the present embodiment will be described. The encoding device encodes three-dimensional data to thereby generate a bitstream. The decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the position information is represented using an orthogonal coordinate system or a polar coordinate system.

Attribute information indicates color information, reflectance, infrared information, a normal vector, or time-of-day information, for example. One three-dimensional point may have a single item of attribute information or have a plurality of kinds of attribute information.

It should be noted that although mainly the encoding and decoding of position information will be described below, the encoding device may perform encoding and decoding of attribute information.

### [TriSoup scheme]

The encoding device according to the present embodiment encodes position information by using a Triangle-Soup (TriSoup) scheme.

The TriSoup scheme is an irreversible compression scheme for encoding position information on point cloud data. In the TriSoup scheme, an original point cloud being processed is replaced by a set of triangles, and the point cloud is approximated on the planes of the triangles. Specifically, the original point cloud is replaced by vertex information on vertexes within each node, and the vertexes are connected with each other to form a group of triangles. Furthermore, the vertex information for generating the triangles is stored in a bitstream, which is sent to the decoding device.

Now, encoding processing using the TriSoup scheme will be described. FIG. 1 is a diagram illustrating an example of an original point cloud. As shown in FIG. 1, point cloud 102 of an object is in target space 101 and includes points 103.

First, the encoding device divides the original point cloud into an octree up to a predetermined depth. In octree division, a target space is divided into eight nodes (subspaces), and 8-bit information (an occupancy code) indicating whether each node includes a point cloud is generated. A node that includes a point cloud is further divided into eight nodes, and 8-bit information indicating whether these eight nodes each include a point cloud is generated. This processing is repeated up to a predetermined layer.

Here, typical octree encoding divides nodes until the number of point clouds in each node reaches, for example, one or a threshold. In contrast, the TriSoup scheme performs octree division up to a layer along the way and not for layers lower than that layer. Such an octree up to a midway layer is called a trimmed octree.

FIG. 2 is a diagram illustrating an example of a trimmed octree. As shown in FIG. 2, point cloud 102 is divided into leaf-nodes 104 (lowest-layer nodes) of a trimmed octree.

The encoding device then performs the following processing for each leaf-node 104 of the trimmed octree. It should be noted that a leaf-node may hereinafter also be simply referred to as a node. The encoding device generates vertexes on edges of the node as representative points of the point cloud near the edges. These vertexes are called edge vertexes. For example, an edge vertex is generated on each of a plurality of edges (for example, four parallel edges).

FIG. 3 is a diagram illustrating an example of two-dimensional display of leaf-node 104, for example, the xy-plane viewed along the z-direction shown in FIG. 1. As shown in FIG. 3, edge vertexes 112 are generated on edges based on points near the edges, among points 111 within leaf-node 104.

It should be noted that the dotted lines in FIG. 3 along the perimeter of leaf-node 104 represent the edges. Also in this example, each edge vertex 112 is generated at a weighted average of the positions of points within the distance 1 from the corresponding edge (points within each range 113 in FIG. 3). It should be noted that the unit of distance may be, by way of example and not limitation, the resolution of the point cloud. Although the distance (the threshold) is 1 in this example, the distance may be a value other than 1 or may be variable.

The encoding device then generates a vertex inside the node as well, based on a point cloud located in the direction of the normal to the plane that includes edge vertexes. This vertex is called a centroid vertex.

FIGS. 4 and 5 are diagrams for describing a method for generating the centroid vertex. First, the encoding device selects, for example, four points as representative points from a group of edge vertexes. In the example shown in FIG. 4, edge vertexes v1 to v4 are selected. The encoding device then calculates approximate plane 121 passing through the four points. The encoding device then calculates normal n to approximate plane 121 and average coordinates M of the four points. The encoding device then generates centroid vertex C at weighted-average coordinates of one or more points near a half line extending along normal n from average coordinates M (e.g., points within range 122 shown in FIG. 5).

The encoding device then entropy-encodes vertex information, which is information on the edge vertexes and the centroid vertex, and stores the encoded vertex information in a geometry data unit (hereinafter referred to as a GDU) included in the bitstream. It should be noted that, in addition to the vertex information, the GDU includes information indicating the trimmed octree.

FIG. 6 is a diagram illustrating an example of the vertex information. The above processing transforms point cloud 102 into vertex information 123, as shown in FIG. 6.

Now, decoding processing for the bitstream generated as above will be described. First, the decoding device decodes the GDU from the bitstream to obtain the vertex information. The decoding device then connects the vertexes to generate a TriSoup surface, which is a group of triangles.

FIG. 7 is a diagram illustrating an example of the TriSoup surface. In the example shown in FIG. 7, four edge vertexes v1 to v4 and centroid vertex C are generated based on the vertex information. Furthermore, triangles 131 (a TriSoup surface) are generated, each having centroid vertex C and two edge vertexes as its vertexes. For example, a pair of two edge vertexes on a pair of two adjacent edges is selected to form triangle 131 having the selected pair of edge vertexes and the centroid vertex as its vertexes.

FIG. 8 is a diagram for describing point cloud reconstruction processing. The above processing is performed for each leaf-node to generate a three-dimensional model that represents the object with triangles 131, as shown in FIG. 8.

The decoding device then generates points 132 at regular intervals on the surface of triangles 131 to reconstruct the position information on point cloud 133.

### [Representation of ridge line of point cloud surface]

In a case where a curved surface portion of the point cloud distribution (point cloud surface) is distributed such that it is embraced within a leaf node, the surface model made by connecting the vertices cannot reproduce the shape of the original point cloud in some cases because the curved surface portion of the point cloud and the edge do not intersect each other and vertices for representing the curved portion are not created.

FIG. 9 is a diagram illustrating an example of a point cloud in a case where a point cloud is distributed across node 1 and node 2, and a ridge line is formed. As shown in FIG. 9, based on the point cloud distribution close to edges, edge vertices 112 are generated.

FIG. 10 is a diagram illustrating a centroid vertex generation example in this case. As shown in FIG. 10, each centroid vertex 151 is generated in the normal direction of an approximate plane of the edge vertex group.

FIG. 11 is a diagram illustrating a generation example of triangles 131 (TriSoup surfaces) in this case. As shown in FIG. 11, each triangle 131 is generated by connecting a plurality of vertices (plurality of edge vertices and a centroid vertex). In this case, as indicated by region 152 in FIG. 11, the point cloud in the vicinity of the boundary of the nodes cannot be reproduced.

This is because the centroid vertex successfully samples the original point cloud surface but the current scheme can create no vertex between two centroid vertices of two neighboring nodes. For example, in a case where a ridge line is continuously distributed in the node along the direction of any of x, y, and z axes, no vertex corresponding to the ridge line is generated because the ridge line is not across any edge. Accordingly, this problem occurs.

In the present embodiment, the encoding device predicts the ridge line of the point cloud surface. Upon determination that two neighboring nodes have the same ridge line, the encoding device transfers, to the decoding device, information for connecting two centroid vertices of the two neighboring nodes by a line segment. The decoding device connects the two centroid vertices using this information, and generates a new vertex (face vertex) at the intersection between the obtained line segment and a shared surface between the two nodes. When generating triangle 131, the decoding device can reproduce the ridge line using the new vertex. It should be noted that the shared surface is a surface shared by two nodes, and is a surface on which the two nodes are adjacent to each other.

According to the method described above, the point cloud surface in the vicinity of the node boundary can be reproduced. Accordingly, a decoded point cloud more similar to the original point cloud can be obtained. It should be noted that in the above description, the point cloud surface is only used to describe the problem concerning the ridge line. The ridge line is not required to be actually obtained.

### [Face vertex generation method]

Hereinafter, a method of generating a face vertex that is a new vertex to represent the ridge line is described. FIG. 12 is a diagram illustrating cross-sections of node 1 and node 2 illustrated in FIG. 10, and is a diagram illustrating cross-sections on a yz plane.

First, the encoding device generates an approximate plane using the position of the edge vertex group, and generates a predicted plane by translating the approximate plane so as to include the centroid vertex. It should be noted that reference symbol G1 illustrated in FIG. 12 denotes the center of balance of the edge vertices of node 1, and reference symbol G2 denotes the center of balance of the edge vertices of node 2. Furthermore, reference symbol C1 denotes the centroid vertex of node 1, and reference symbol C2 denotes the centroid vertex of node 2.

Next, the encoding device calculates a weighted average of coordinates of a neighboring point cloud adjacent to a line intersection at which the predicted plane and the shared surface intersect each other, and generates a tentative vertex at the calculated weighted average position. It should be noted that the neighboring point cloud adjacent to the line intersection is, for example, a plurality of points each having a distance equal to or shorter than a predetermined distance from the line intersection. FIG. 13 is a diagram illustrating a tentative vertex generation example. In the example illustrated in FIG. 13, tentative vertices A1 and A2 are respectively generated in node 1 and node 2.

Specifically, the tentative vertex is generated on the shared surface of the leaf node. Furthermore, a process similar to that for the current node is also performed for six neighboring nodes that are adjacent to each other in the six directions in the current node to be processed, and the tentative vertex is generated on the shared surface between the neighboring node and the current node in the neighboring node. For example, in the example illustrated in FIG. 13, node 1 is the current node, node 2 is the neighboring node, tentative vertex A1 is generated on the shared surface of node 1, and tentative vertex A2 is generated on the shared surface of node 2.

Next, the encoding device determines whether to use the tentative vertex as a new vertex. For example, for this determination, the following two determinations are used.

For the first determination, the encoding device determines whether the distance between tentative vertex A1 and tentative vertex A2 on the shared surface is close to each other. That is, the encoding device determines whether the distance between tentative vertex A1 and tentative vertex A2 is smaller than a predetermined first threshold.

For the second determination, the encoding device determines whether tentative vector v1 that is the vector from centroid vertex C1 to tentative vertex A1 in node 1 and tentative vector v2 that is the vector from centroid vertex C2 to tentative vertex A2 in node 2 are substantially parallel to each other. That is, the encoding device determines whether the angle between tentative vector v1 and tentative vector v2 is smaller than a predetermined second threshold.

If both the first determination and the second determination are true, that is, the distance between tentative vertex A1 and tentative vertex A2 is small, and tentative vector v1 and tentative vector v2 are substantially parallel to each other, the encoding device determines there is a ridge line, and adds a face vertex as a new vertex at the intersection between the line segment connecting centroid vertex C1 in node 1 to centroid vertex C2 in node 2 and the shared surface.

It should be noted that the encoding device may perform only one of the first determination and the second determination. Alternatively, if at least one of the first determination and the second determination is true, the encoding device may determine that there is a ridge line.

FIG. 14 is a diagram illustrating a face vertex generation example. For example, if both the first determination and the second determination are true, the encoding device generates a face vertex B at the intersection between the line segment connecting centroid vertex C1 to centroid vertex C2 and the shared surface.

### [Syntax]

The encoding device performs the determination of face vertex generation described above, between the current node and each of the six neighboring nodes. Furthermore, this determination is limited to the node surface (candidate surface) intersecting the predicted plane among the six surfaces of the current node. It should be noted that narrowing down of candidate surfaces of the node can be performed also in the decoding device.

FIG. 15 is a diagram illustrating a syntax example of GDU (geometry_data_unit_data) included in a bitstream. GDU includes octree information, and geometry_trisoup_data. The octree information is information indicating the configuration of a trimmed octree, and information indicating the positions of a plurality of leaf nodes included in the trimmed octree.

The geometry_trisoup_data includes the number of edges, edge vertex information, the number of edge vertices, edge vertex position information, the number of candidate surfaces, and face vertex information.

The number of edges indicates the number of unique edges. It should be noted that the unique edges are edges which are unique and from which edges with redundant coordinates are excluded. The edge vertex information is provided for each edge, and edge vertex information [i] indicates whether an edge vertex is present on the i-th edge. For example, a value of 0 indicates that no edge vertex is present, and a value of 1 indicates that an edge vertex is present.

The number of edge vertices indicates the number of vertices on the edge, that is, the item number of edge vertices. The edge vertex position information is provided for each edge vertex. The edge vertex position information [i] indicates the position of the i-th edge vertex.

The number of candidate surfaces indicates the item number of candidate surfaces. The face vertex information is provided for each candidate surface. The face vertex information [i] indicates whether a face vertex is present on the i-th candidate surface (whether a face vertex is generated). For example, a value of 0 indicates that no face vertex is present, and a value of 1 indicates that a face vertex is present.

The decoding device reconstructs information on the candidate surfaces, based on the position of the node, the positions of the edge vertices, and the position of the centroid vertex. The decoding device sorts the candidate surfaces in an order of coordinates, and extracts a unique candidate surface (a candidate surface that is unique) where candidate surfaces with redundant coordinates are excluded. Accordingly, the arrangement order of the candidate surfaces is uniquely determined. The decoding device generates the face vertex using the face vertex information.

It should be noted that instead of the number of candidate surfaces, information indicating the number of all the unique surfaces may be stored in the bitstream. Alternatively, the encoding device need not store the information indicating the number of all the unique surfaces in the bitstream, and the decoding device may calculate the number of all the unique surfaces from the number of leaf nodes and the arrangement relationship of nodes. Alternatively, the decoding device may calculate a predicted plane, and calculate the number of candidate surfaces using the predicted plane.

### [Processing flow]

Hereinafter, processing flows in the encoding device and the decoding device are described. FIG. 16 is a flowchart of an encoding processing by the encoding device.

First, the encoding device generates a trimmed octree, and generates a plurality of leaf nodes (leaf node group) (S101). Next, the encoding device performs the processes of following steps S102 to S104 (loop processing 1) for each of the leaf nodes of the trimmed octree.

First, the encoding device determines edge vertices, an approximate plane, and a centroid vertex, based on the point cloud distribution in the node (S102). Next, the encoding device determines the predicted plane, based on the approximate plane and the centroid vertex (S103). Next, the encoding device determines a tentative vertex, based on a point cloud distribution adjacent to the line intersection between the predicted plane and the node surface (S104).

Thus, loop processing 1 for the current node is finished. Next, the encoding device performs the processes of following steps S105 to S111 (loop processing 2) for each of the leaf nodes of the trimmed octree.

First, the encoding device determines whether a tentative vertex is present on the shared surface between the current node to be processed and a neighboring node adjacent to the current node (S105).

If a tentative vertex is present on the shared surface (Yes in S105), it is determined whether the distance between the tentative vertex in the current node on the shared surface and the tentative vertex in the neighboring node is equal to or less than a first threshold, and the angle difference between the tentative vector in the current node and the tentative vector in the neighboring node is equal to or less than a second threshold (S106).

If the distance is equal to or less than the first threshold, and the angle difference is equal to or less than the second threshold (Yes in S106), the encoding device sets the face vertex information on the candidate surface to the value of 1 (true) (S107).

On the other hand, if the distance is larger than the first threshold, or the angle difference is larger than the second threshold (No in S106), the encoding device sets the face vertex information on the candidate surface to the value of 0 (false) (S108).

Next, the encoding device adds the face vertex information on the candidate surface to a face vertex information list (S109).

It should be noted that the processes of steps S105 to S109 are performed for each of six neighboring nodes adjacent to the current node in the six directions.

Next, the encoding device applies entropy encoding to the face vertex information list, and stores the encoded face vertex information list in GDU (S110).

After step S110 or if a tentative vertex is not present on the shared surface (No in S105), the encoding device applies entropy encoding to vertex information that is position information on all the vertices (the edge vertices and the centroid vertex) included in the current node, and stores the encoded vertex information in GDU (S111). Thus, loop processing 2 for the current node is finished.

FIG. 17 is a flowchart of decoding processing by the decoding device. First, the decoding device obtains a GDU header and GDU from the bitstream (S121). Next, the decoding device applies entropy decoding and obtains the octree information from GDU, and generates the leaf nodes (leaf node group) of the trimmed octree using the octree information (S122).

Next, the decoding device performs the processes of following steps S123 to S124 (loop processing 1) for each of the leaf nodes of the trimmed octree. First, the decoding device obtains the vertex information indicating the positions of the edge vertices and the centroid vertex from GDU (S123). Specifically, the decoding device applies entropy decoding to the encoded vertex information included in GDU to thereby obtain the vertex information.

Next, the decoding device calculates a predicted plane from the approximate plane and the centroid vertex, and determines the candidate surface (S124). Thus, loop processing 1 for the current node is finished.

Next, the decoding device obtains face vertex information items (face vertex information list) from GDU, and generates a candidate surface list that is a list of all the candidate surfaces (S125). Specifically, the decoding device decodes the encoded face vertex information (face vertex information list) included in GDU to thereby obtain the face vertex information items. The decoding device generates the candidate surface list using the face vertex information items.

Next, the decoding device performs the processes of following steps S126 to S128 (loop processing 2) for each of the leaf nodes of the trimmed octree. First, the decoding device determines whether the current node includes a candidate surface and the face vertex information on the candidate surface has a value of 1 (true) (S126).

If the current node includes a candidate surface and the face vertex information on the candidate surface has the value of 1 (Yes in S126), the decoding device generates a face vertex at the intersection between the line segment connecting the centroid vertex of the neighboring node sharing the candidate surface with the current node and the centroid vertex of the current node, and the shared surface (S127). On the other hand, if the current node does not have a candidate surface or the face vertex information on the candidate surface has the value of 0 (false) (No in S126), the decoding device generates no face vertex. It should be noted that if the current node includes a plurality of candidate surfaces, the processes in steps S126 and S127 are performed for each candidate surface.

Next, the decoding device generates a triangle group using all the vertices (the edge vertices, the centroid vertex, and the face vertices) in the current node, and generates points on the surface of each triangle (S128). Thus, loop processing 2 for the current node is finished.

### [Variation 1 of face vertex generation method]

As a face vertex generation method, a method other than that described above may be used. As Variation 1 of the face vertex generation method, the following method may be used. FIGS. 18 and 19 are diagrams for describing Variation 1 of the face vertex generation method.

The encoding device calculates a centroid vector that is a vector connecting the approximate plane to the centroid vertex in the normal direction of the approximate plane. The encoding device projects the centroid vector on juxtaposed four surfaces of the node, and if there is an neighboring point cloud on the projected vector, the encoding device generates a face vertex at the weighted average position.

For example, as shown in FIG. 18, the encoding device calculates centroid vector CV1 connecting center of balance G1 of the edge vertices on the approximate plane to centroid vertex C1, for node 1. Next, the encoding device projects centroid vector CV1 on surfaces of node 1 on the negative side in the y direction, the negative side in the z direction, the positive side in the y direction, and the positive side in the z direction to thereby generate projected vectors PV11, PV12, PV13, and PV14. The encoding device determines whether a point cloud (neighboring point cloud) is present adjacent to each of positions indicated by projected vectors PV11, PV12, PV13, and PV14. It should be noted that the neighboring point cloud is, for example, a plurality of points each having a distance equal to or less than a predetermined distance from the current position. If a neighboring point cloud is present, the encoding device generates a face vertex at the weighted average position of the positions of the neighboring point cloud. In the example in FIG. 18, the neighboring point cloud is present with respect to projected vector PV11. As shown in FIG. 19, face vertex B1 is generated at the position of the weighted average of the positions of the neighboring point cloud.

Likewise, the encoding device calculates centroid vector CV2 connecting center of balance G2 of the edge vertices on the approximate plane to centroid vertex C2, for node 2. Next, the encoding device projects centroid vector CV2 on surfaces of node 2 on the negative side in the y direction, the negative side in the z direction, the positive side in the y direction, and the positive side in the z direction to thereby generate projected vectors PV21, PV22, PV23, and PV24. The encoding device determines whether a point cloud (neighboring point cloud) is present adjacent to the positions indicated by projected vectors PV21, PV22, PV23, and PV24. If a neighboring point cloud is present, the encoding device generates a face vertex at the position of the weighted average of the positions of the neighboring point cloud. In the example in FIG. 18, the neighboring point cloud is present with respect to projected vector PV23. As shown in FIG. 19, face vertex B2 is generated at the position of the weighted average of the positions of the neighboring point cloud.

The method of Variation 1 negates the need of calculation of the predicted plane and the candidate plane, tentative vertex comparison, and tentative vector comparison, which can reduce the processing amount. Furthermore, information on the neighboring node is not used to generate the face vertex of the current node. Accordingly, simple processing only using information on the current node can be achieved.

### [Variation 2 of face vertex generation method]

Next, Variation 2 of the face vertex generation method is described. FIG. 20 is a diagram for describing Variation 2 of the face vertex generation method.

The encoding device generates the face vertex at the weighted average position of the neighboring point cloud adjacent to the line intersection between the predicted plane and the node surface. Specifically, the encoding device calculates the approximate plane and the predicted plane, according to the description with reference to FIG. 12. Next, as shown in FIG. 20, for node 1, the encoding device determines whether a point cloud (neighboring point cloud) is present adjacent to the line intersections formed by the predicted plane and the surfaces of node 1 (four surfaces on the positive side in the x direction, the negative side in the x direction, the positive side in the y direction, and the negative side in the y direction in the example illustrated in FIG. 20). If a neighboring point cloud is present, the encoding device generates a face vertex at the position of the weighted average of the positions of the neighboring point cloud.

The method of Variation 2 negates the need of tentative vertex comparison, and tentative vector comparison, which can reduce the processing amount. Furthermore, information on the neighboring node is not used to generate the face vertex of the current node. Accordingly, simple processing only using information on the current node can be achieved.

### [Variation 3 of face vertex generation method]

Next, Variation 3 of face vertex generation method is described. FIGS. 21 and 22 are diagrams for describing Variation 3 of the face vertex generation method.

The encoding device calculates the approximate point cloud surface from the neighboring point cloud adjacent to the predicted plane, and calculates the curved line intersection between the approximate point cloud surface and the predicted plane. The encoding device generates a face vertex at the curved line vertex on the curved line intersection.

For example, in the example illustrated in FIGS. 21 and 22, for each of node 1 and node 2, the approximate point cloud surface and the curved line intersection are obtained. Furthermore, face vertex B1 is generated for node 1, and face vertex B2 is generated for node 2. It should be noted that FIGS. 21 and 22 only illustrate the processing for the shared surface of node 1 and node 2. However, similar processing is performed for other surfaces.

It should be noted that if the distance of the vertex of the curved line intersection from the edge is equal to or more than a predetermined distance, a face vertex may be generated, and if the distance of the vertex from the edge is less than the predetermined distance, a face vertex need not be generated.

The method of Variation 3 negates the need of tentative vector comparison, which can reduce the processing amount. Furthermore, information on the neighboring node is not used to generate the face vertex of the current node. Accordingly, simple processing only using information on the current node can be achieved.

### [Variation 4 of face vertex generation method]

Next, Variation 4 of the face vertex generation method is described. FIG. 23 is a diagram for describing Variation 4 of the face vertex generation method.

If a point cloud including as many points as a certain constant number or more is present adjacent to the line segment connecting two centroid vertices of adjacent two nodes, the encoding device generates a face vertex at the intersection between the line segment and the shared surface.

For example, in the example illustrated in FIG. 23, the encoding device tentatively connects centroid vertex C1 of node 1 to centroid vertex C2 of node 2 to thereby generate line segment L0. The encoding device determines whether the number of points present adjacent to line segment L0 is equal to or more than a threshold (first determination). That is, the encoding device determines whether the number of points included in the point cloud (neighboring point cloud) present in a region within a predetermined distance from line segment L0 is equal to or more than the threshold. Furthermore, the encoding device determines whether the distribution of the neighboring point cloud along line segment L0 is uniform (second determination). For example, the encoding device may divide the region adjacent to line segment L0 into a plurality of regions, and determine that the distribution of the neighboring point cloud along line segment L0 is uniform if the difference between the numbers of points included in the respective regions is equal to or less than a threshold. Alternatively, if the number of points included in every region is equal to or more than a threshold, the encoding device may determine that the distribution of the neighboring point cloud along line segment L0 is uniform.

Furthermore, if both the first determination and the second determination are "true", the encoding device determines to connect centroid vertices C1 and C2 to each other, and generates a face vertex at the intersection between the line segment and the shared surface. It should be noted that if at least one of the first determination and the second determination is "true", the encoding device may generate a face vertex. Alternatively, the encoding device may perform only one of the first determination and the second determination, and generate a face vertex if the determination is "true".

### [Other variations]

As a face vertex generation method, the following method may be used. For example, according to a method of determining a combination of nodes for forming vertices on the surfaces of the node, one or more nodes other than the current node may be selected. Alternatively, one or more neighboring nodes that share the surface of the node, the point on an edge or a node corner with the current node may be designated.

As a method of determining a surface of a node where a vertex is to be formed from the combinations of nodes defined as described above, the following method may be used. Any one or more node surfaces present between two nodes may be selected. Here, "node surface present between two nodes" is one or more of node surfaces present on lines formed by connecting the coordinates of corners that each of the two nodes has. FIG. 24 is a diagram illustrating an example of a node surface present between two nodes. In the example in FIG. 24, the two nodes are node 1 and node 4, and "node surfaces present between two nodes apart from each other" are surface 1, surface 2, and surface 3. If the two nodes are adjacent to each other, "the node surface present between the two nodes" is the shared surface between the two nodes.

Furthermore, as a face vertex generation method for the node surface determined as described above, the following method may be used. For node 1 and node 2 that form a combination, the encoding device calculates the line segment that connects a feature point that node 1 has and a feature point that node 2 has, and generates a face vertex on the intersection between the line segment and the node surface. Here, the feature point is any of vertices (the edge vertices or the centroid vertex) that the node has. Alternatively, the feature point may be any of points that the node has. Alternatively, the feature point may be a point indicating the feature amount of the point cloud in the node. The feature amount may be, for example, a point obtained by interpolating the positions of the point cloud in the node, or the weighted average position of the point cloud as shown in FIG. 25. FIG. 25 is a diagram illustrating an example of the weighted average position of the point cloud.

Alternatively, as a method of providing a line segment intersecting the node surface, the following method may be used. The encoding device may define combinations of a plurality of feature points that node 1 has and a plurality of feature points that node 2 has, for node 1 and node 2 that form a combination, and generate a face vertex at the position of the weighted average of intersections between one or more line segments connecting feature points forming combinations and the node surface. FIG. 26 is a diagram illustrating an example of the position of the weighted average of intersections. In this example, face vertices are generated at the position of the weighted average of three intersections between the shared surface between node 1 and node 2 and line segments L1, L2, and L3. It should be noted that the weight used for the weighted average may be calculated based on, for example, the distance between the feature point and the node surface.

Furthermore, as the method of transmitting information concerning the processing described above, the following method may be used. The information for generating the face vertex may be stored in the bitstream if a first flag indicating whether to generate the face vertex is on (for example, a value of 1), and need not be stored in the bitstream if the first flag is off.

The first flag is stored in SPS, GPS, or GDU, for example. SPS (Sequence Parameter Set) is metadata (a parameter set) that is common to a plurality of frames. GPS (Geometry Parameter Set) is metadata (a parameter set) concerning encoding of position information. For example, GPS is metadata common to a plurality of frames.

Alternatively, the first flag need not be provided, and the information may always be stored in the bitstream.

Furthermore, besides the first flag, one or more flags for switching various methods concerning face vertex generation may be separately provided. For example, based on the flags, the methods described above may be switched.

Furthermore, as the information for face vertex generation, the following information may be used. The information may indicate whether for each of surfaces each intervening between two nodes in the node group to be decoded, a face vertex is generated on the plane. Here, the surface intervening between two nodes is the shared surface between two nodes that are adjacent to each other with the surface intervening therebetween.

Alternatively, the information may include identification information (ID) indicating two nodes, and information indicating whether to generate a face vertex on each of all or some of node surfaces on the line segment connecting the two nodes. Here, the two nodes are, for example, node 1 and node 4 illustrated in FIG. 24.

Alternatively, only for limited surfaces of nodes intersecting the predicted plane illustrated in FIGS. 12 and 13, the information may indicate whether to generate a face vertex on each of these surfaces, instead of indicating whether to generate a face vertex on each of all the surfaces.

Alternatively, for each of all the six surfaces that each node has, the information may indicate whether to generate a face vertex on the surface.

Alternatively, for each of the unique surfaces where redundant positions are excluded, the information may indicate whether to generate a face vertex on the surface.

Alternatively, for all the surfaces having no neighboring node or some of these surfaces among the surfaces that each node has, the information may indicate whether to generate a face vertex on the surface.

Alternatively, the encoding device may generate attribute information (for example, color or reflectance) in addition to position information on the generated face vertices or points generated on the surface of a triangle generated using these face vertices. Alternatively, the encoding device may encode the generated attribute information, and store the encoded attribute information in the bitstream.

According to Variations 1 to 3 of the face vertex generation method described above, the face vertex for the current node can be generated without using information on other nodes. Also in the processes illustrated in FIGS. 12 to 14, using tentative vertex A1 of node 1 as it is as the face vertex allows the face vertex to be generated without using information on other nodes. The encoding device may perform the face vertex generation process without using information on other nodes as described above, for nodes located at the ends. The node located at the end is a node that has at least one surface with no neighboring node.

Furthermore, the encoding device may switch the face vertex generation method depending on the position of the node. Specifically, the encoding device may use the processes illustrated in FIGS. 12 to 14 or the face vertex generation method using information on other nodes as in Variation 4, for nodes that are not located at the end, and use a method without using information on other nodes, for the nodes located at the ends.

Furthermore, in the processes illustrated in FIG. 12, the approximate plane is shifted so that the predicted plane can include the centroid vertex. However, the predicted plane does not necessarily include the centroid vertex, and the approximate plane may be shifted toward the centroid vertex.

While the example of using the TriSoup scheme is thus described above, the method in the present embodiment is also effective for another scheme that represents the original point cloud with the edge vertices on the approximate surface and is other than the TriSoup scheme. For example, the approximate surface may be a plane having a polygonal shape other than a triangle. It should be noted that the approximate surface may be a plane or a curved surface.

In the above description, the example in which the new vertex (face vertex) is generated on the surface of the node is indicated. However, the new vertex is not necessarily strictly generated on the node surface. There is a possibility that by generating the new vertex inside the node or outside the node, the reproducibility of the original point cloud can be further improved.

In the above description, the problem concerning the ridge line is solved. However, the problem is not limited to that concerning the ridge line. Likewise, the solution is not limited to the solution concerning the ridge line. The method of the present embodiment is effective for the conventional art in which the vertices defining the approximate surface are limited on the edge.

### [Another example of representation of ridge line of point cloud surface]

As described above, according to the TriSoup scheme, the shape of the ridge line (ridge) across the adjacent nodes cannot be reconstructed in some cases. In contrast, the encoding device generates the face vertex on the surface in contact with the neighboring node, and reconstructs the point cloud also on the surface of the triangle generated based on the centroid vertex, the face vertices, and the edge vertices.

For example, in a case where a bent portion of the point cloud distribution (point cloud surface) is distributed within the leaf node, the surface model made by connecting the vertices cannot reproduce the shape of the original point cloud in some cases because the corner of the point cloud surface and the edge do not intersect each other and no vertex is formed at the position of the corner.

FIG. 27 is a diagram illustrating an example of a point cloud in a case where a point cloud is distributed across node 1 and node 2, and a ridge line is formed. As shown in FIG. 27, based on the point cloud distribution close to edges, edge vertices 112 are generated.

FIG. 28 is a diagram illustrating a centroid vertex generation example in this case. As shown in FIG. 28, each centroid vertex 151 is formed in the normal direction of an approximate plane of the edge vertex group.

FIG. 29 is a diagram illustrating a generation example of triangles 131 (TriSoup surface) in this case. As shown in FIG. 29, each triangle 131 is generated by connecting a plurality of vertices (plurality of edge vertices and a centroid vertex). In this case, as illustrated in FIG. 29, the point cloud in the vicinity of the node boundary cannot be reproduced.

This is because the centroid vertex successfully samples the original point cloud surface but the current scheme can create no vertex between two centroid vertices of two neighboring nodes. For example, in a case where a ridge line is continuously distributed in the node along the direction of any of x, y, and z axes, no vertex corresponding to the ridge line is formed because the ridge line is not across any edge. Accordingly, this problem occurs.

In the present embodiment, the encoding device predicts the ridge line of the point cloud surface. Upon determination that two neighboring nodes have the same ridge line, this device transfers, to the decoding device, information for connecting two centroid vertices of the two neighboring nodes by a line segment. This information is, for example, 1-bit information assigned to each surface between nodes.

The decoding device connects the centroid vertices using this information, and generates a new vertex (face vertex) at an intersection between the obtained line segment and a shared surface between the nodes. When generating triangle 131, the decoding device can reproduce the ridge line using the new vertex.

Since the coordinate position of the face vertex is not quantized, a problem of positional deviation due to quantization is not present.

FIG. 30 is a diagram illustrating a face vertex generation example. As shown in FIG. 30, the decoding device can reproduce the ridge line by generating face vertex 161 and generating triangle 131 using face vertex 161.

According to the method described above, the point cloud surface in the vicinity of the node boundary can be reproduced. Accordingly, a decoded point cloud more similar to the original point cloud can be obtained. It should be noted that in the above description, the point cloud surface is only used to describe the problem concerning the ridge line. The ridge line is not required to be actually obtained.

### [Overview of generation, transfer, and reconstruction of face vertex]

First, evaluation and reconstruction of connectivity of centroid vertices are described. The encoding device generates the line segment connecting the centroid vertex of the current node and the centroid vertex of the neighboring node, with respect to each node, and determines the connectivity between the centroid vertices based on the weight for the point cloud adjacent to the intersection between the line segment and the shared surface between the nodes.

The encoding device sets a boolean (bool) value (for example, the face vertex information described above) indicating whether to connect two centroid vertices with respect to this surface and generate the face vertex.

The boolean value of each surface is transferred from the encoding device to the decoding device. For the surface having a boolean value = true, the decoding device generates a face vertex at the position at which the line segment connecting the centroid vertices of the nodes on both the sides of this surface intersects this surface.

FIG. 31 is a diagram illustrating an example of surfaces about which the connectivity evaluation and reconstruction of the centroid vertex among the six surfaces of the node. For example, as shown in FIG. 31, for three surfaces on a side of each axis with a larger coordinate among the six surfaces of the node, the encoding device and the decoding device perform connectivity evaluation and reconstruction of the centroid vertex on both the sides of each of the surfaces.

Next, an overview of reduction of the data amount of the bitstream, and limitation on face information is described. To reduce the transfer data amount, the encoding device sets a condition for face vertex information (set of boolean values) using information known to the decoding device, thus reducing the data amount of face vertex information to be transmitted. It should be noted that the details of the process are described later.

Next, ordering of an inner-node vertex group is described. To generate the TriSoup surface, two edge vertices, or edge vertices and the face vertex are required to be appropriately selected. For example, if edge vertices close to the face vertex are not selected, and far edge vertices are selected, the surface approximating the point cloud is not formed. Furthermore, a face to be approximated is not generated. Accordingly, for example, to provide the surface without opening holes with no gap in the node, ordering using the rotation order for the edge vertices and face vertex group with reference to the centroid vertex is required. It should be noted that the details are described later.

### [Processing flow]

FIG. 32 is a flowchart of encoding processing by the encoding device. First, the encoding device applies octree division to the point cloud and generates the trimmed octree, and generates a plurality of leaf nodes (leaf node group) of the trimmed octree. Furthermore, the encoding device applies arithmetic encoding (entropy encoding) to the octree information indicating the trimmed octree, and stores the encoded octree information in the bitstream (S201).

Next, the encoding device generates the edge vertices and the centroid vertex from the point cloud distribution in the node, for each of the nodes (leaf nodes), applies arithmetic encoding (entropy encoding) to vertex information indicating each item of position information, and stores the encoded vertex information in the bitstream (S202).

Next, only for the surface satisfying a geometry condition among the surfaces of each node, the encoding device generates a face vertex at the position at which the line segment connecting the centroid vertex of the current node and the centroid vertex of the neighboring node intersects the surface (S203).

Next, the encoding device encodes face vertex information on the surface satisfying the geometry condition, and stores the encoded face vertex information in the bitstream (S204). Here, the face vertex information is information indicating whether to connect the centroid on both the sides of the surface to each other and generate the face vertex.

Next, the encoding device performs the processes of following steps S205 to S208 (loop processing) for each of the leaf nodes of the trimmed octree. First, the encoding device applies counterclockwise ordering to the edge vertices and the face vertices in the node (S205). Next, the encoding device connects the vertex group (the edge vertices, centroid vertex, and face vertices) in the node, and generates a triangle (TriSoup surface) (S206).

Next, the encoding device generates a plurality of points on the surface of the triangle (S207). Next, the encoding device makes the decoded points in the node unique with their coordinate values, and adds these points to the decoded point cloud (S208). Here, making unique means exclusion of points with redundant coordinate values. Thus, the loop processing for the current node is finished.

FIG. 33 is a flowchart of decoding processing by the decoding device. First, the decoding device applies arithmetic decoding (entropy decoding) to the bitstream and obtains the octree information, generates the trimmed octree using the octree information, and generates a plurality of leaf nodes (leaf node group) (S211).

Next, the decoding device applies arithmetic decoding to the bitstream and obtains the vertex information indicating the positions of the edge vertices and the centroid vertex (S212).

Next, only for the surface satisfying the geometry condition among the surfaces of each leaf node, the decoding device applies arithmetic decoding to the face vertex information (S213). Next, the decoding device generates the face vertex, based on the face vertex information (S214).

Next, the decoding device performs the processes of following steps S215 to S218 (loop processing) for each of the leaf nodes of the trimmed octree. First, the decoding device applies counterclockwise ordering to the edge vertices and the face vertices in the node (S215). Next, the decoding device connects the vertex group (the edge vertices, centroid vertex, and face vertices) in the node, and generates a triangle (TriSoup surface) (S216).

Next, the decoding device generates a plurality of points on the surface of the triangle (S217). Next, the decoding device makes the decoded points in the node unique with their coordinate values, and adds these points to the decoded point cloud (S218). Here, making unique means exclusion of points with redundant coordinate values. Thus, the loop processing for the current node is finished.

FIG. 34 is a flowchart of transfer processing of face vertex information (details of steps S203 and S204 illustrated in FIG. 32).

The encoding device performs the processes of following steps S221 to S226 (loop processing) for the surfaces of each node. First, the encoding device determines whether the current surface as the processing target satisfies a first condition for face vertex generation (S221). It should be noted that the first condition is a limiting condition based on geometry information for reducing the data amount of an after-mentioned bitstream, and described in detail later. Furthermore, by providing this condition, surfaces where no face vertex can be generated can be excluded based on the positional relationship between the node, edge vertices, and centroid vertex. Accordingly, the transfer information amount can be reduced.

If the first condition is satisfied (Yes in S221), the encoding device determines whether the current surface satisfies a second condition for generating the face vertex (S222). It should be noted that the second condition is evaluation of the weight for the point cloud adjacent to the position of the face vertex candidate, in evaluation of the connectivity of the centroid vertex described later. It should be noted that the details are described later. By providing the condition, the face vertex based on the distribution of the ridge line shape of the point cloud on the surface can be generated.

If the second condition is satisfied (Yes in S222), the encoding device sets the face vertex information on the current surface to "true (with the vertex)", and accumulates the face vertex information that is to be transferred (S223). On the other hand, if the second condition is not satisfied (No in S222), the face vertex information on the current surface is set to "false (without the vertex)", and accumulates the face vertex information that is to be transferred (S224).

If the first condition is not satisfied (No in S221), the encoding device does not generate the face vertex information on the current surface, regards it as "false", and does not accumulate the face vertex information that is to be transferred (S225).

Next, the encoding device generates a face vertex on the current surface based on the face vertex information (true/false) (S226). That is, the encoding device generates the face vertex on the current surface if the face vertex information is "true", and does not generate the face vertex on the current surface if the face vertex information is "false" (or regarded as "false"). Thus, the loop processing for the current surface is finished.

Next, the encoding device encodes the accumulated face vertex information items, and stores the encoded face vertex information items in the bitstream (S227).

FIG. 35 is a flowchart of face vertex information decoding processing (details of steps S213 and S214 illustrated in FIG. 33).

The decoding device performs the processes of following steps S231 to S234 (loop processing) for the surfaces of each node. First, the decoding device determines whether the current surface satisfies a first condition for face vertex generation (S231). It should be noted that the first condition is the same as the first condition in step S221 illustrated in FIG. 34.

If the first condition is satisfied (Yes in S231), the decoding device decodes the bitstream and obtains face vertex information indicating whether to generate the face vertex on the current surface (S232). Accordingly, it is determined whether to generate the face vertex on the current surface ("true" or "false").

Furthermore, if the first condition is not satisfied (No in S231), the decoding device does not decode the bitstream and obtain the face vertex information on the current surface, and sets the face vertex information on the current surface to "false" (S233).

Next, the decoding device generates the face vertex on the current surface based on the face vertex information (true/false) (S234). That is, the decoding device generates the face vertex on the current surface if the face vertex information is "true", and does not generate the face vertex on the current surface if the face vertex information is "false". Thus, the loop processing for the current surface is finished.

By defining the first condition (the condition preliminarily defined in the encoding device and the decoding device and unchangeable) before the second condition of whether to generate the face vertex as described above, flag information can be prevented from being transferred.

By combining the predefined first condition (unchangeable condition) with the second condition that can be flexibly set in the encoding device and notified using the flag (changeable condition), both data amount reduction and setting flexibility can be achieved.

### [Connectivity evaluation and reconstruction of centroid vertex]

The encoding device evaluates the weight for the point cloud on the line segment connecting the centroid vertices, and if the weight for the point cloud adjacent to the face vertex candidate is equal to or larger than a threshold, the encoding device sets the candidate as the face vertex. Here, the candidate is the intersection between the line segment connecting the centroid vertices and the surface. Furthermore, the weight for the point cloud adjacent to the face vertex candidate is the number of points included in a region with a predetermined distance from the face vertex candidate or the density.

FIG. 36 is a diagram illustrating an example of the face vertex candidate. In this example, the intersection between line segment L1 connecting centroid vertex C1 of node 1 and centroid vertex C2 of node 2, and shared surface F1, is determined as the face vertex candidate.

The encoding device assigns the bitstream one-bit information (centroid vertex information) that means "whether to connect the centroid vertices on both the sides of the surface in the node and generate the vertex on the surface" about the surface, as transfer information to the decoding device. Furthermore, for each of all the surfaces, the encoding device generates this one-bit information item, and stores the generated one-bit information items in the bitstream.

The decoding device obtains the face vertex information besides the node position information, and position information on the edge vertices and the centroid vertex. For each surface, the decoding device generates the face vertex, based on the corresponding face vertex information.

It should be noted that the encoding device herein sets the intersection between the line segment of the centroid vertices and the surface at the position of the face vertex, but may generate the face vertex at a position deviating from the position of the intersection, based on the distribution of the point cloud, for example. In this case, the encoding device stores, in the bitstream, the offset amount between the positions of the intersection and the face vertex on the surface besides the one-bit information. The offset amount is represented as, for example, a two-dimensional value. That is, information indicating the position of the face vertex may be stored in the bitstream. It should be noted that the information indicating the position of the face vertex is not limited to the offset amount, and may be coordinate information, or the coordinate difference from another vertex (the edge vertices or the centroid vertex) or a vector.

According to this scheme, the position of the face vertex becomes one in which the shape of the ridge line of the point cloud is more appropriately reflected while maintaining the connectivity of the point cloud surface between the nodes. Thus, the reconstructed point cloud having a high quality can be obtained.

### [Reduction of bitstream data amount]

The encoding device sets a condition for every surface using information known to the decoding device, and reduces the number of face vertex information items to be transferred. Specifically, since the position information items on the edge vertices and the centroid vertices have already been known, the decoding device uses them and excludes pairs of centroid vertices that cannot be connected to each other, based on the geometry relationship.

For example, the encoding device limits generation of the face vertex information by AND (logical product) of following five conditions (a) to (e). It should be noted that the encoding device may use only some of these conditions, or further combine another condition.

(a) The current node includes centroid vertex (C0). (b) A node is present adjacent to the current node (presence of neighboring node). It should be noted that presence of a neighboring node in any of x, y, and z axes may be employed. (c) The neighboring node includes centroid vertex (C1). This condition is set because if the number of edge vertices is small, no centroid vertex is sometimes generated. (d) The number of edge vertices on the shared surface that the nodes share is two or three. This condition assumes a case where a point cloud is present in a manner of a ridge line.

(e) The surface in a case where the face vertex is generated swells more than the original surface. Here, the surface is a surface made up of a plurality of triangles (TriSoup surfaces). Specifically, if three vectors that are (1) vector Cvec0 from center of balance G0 of the edge vertex group in the current node to centroid vertex C0, (2) vector Cvec1 from center of balance G1 of the edge vertex group in the neighboring node to centroid vertex C1, and (3) vector NF from face vertex candidate F to N that is the foot of the perpendicular on the line segment formed by two edge vertices on the shared surface are not reversed (both the inner product of vector Cvec0 and vector NF, and the inner product of vector Cvec1 and vector NF are positive), the face vertex information on the current surface is set as a transfer target.

FIG. 37 is a diagram illustrating an example arrangement of the vertex group where the face vertex is generated. FIG. 38 illustrates vector NF. The example illustrated in FIG. 37 is an example where two edge vertices are present on the shared surface, and the face vertex is generated, and the surface swells accordingly, and the face vertex information is transferred.

Vector u illustrated in FIG. 38 is a unit vector of vectors E2 and E3. x = E2F·u, and NF = E2F - xu hold. If Cvec0·NF > 0 and Cvec1·NF > 0, the surface swells.

FIG. 39 is a diagram illustrating an example arrangement of the vertex group where two edge vertices are present on the shared surface, and the surface does not swell. In this case, the face vertex information is not transferred.

FIG. 40 is a diagram illustrating an example arrangement of the vertex group where two edge vertices are present on the shared surface, and the surface does not swell. In this case, the face vertex information is not transferred.

FIG. 41 is a diagram illustrating an example arrangement of the vertex group where three edge vertices are present on the shared surface, and the surface swells. In this case, the face vertex information is transferred. In the example illustrated in FIG. 41, among edge vertices E2, E3, and E4, a pair of edge vertices (E2 and E3) where the midpoint of the line segment formed by adjacent two and the face vertex candidate are closest are selected, and point N is determined.

It should be noted that the determination as described above is not necessarily performed. For example, in the case illustrated in FIG. 40, it may be determined that the point cloud surface swells.

According to another condition, if the certain constant number of face vertices are continuously generated in the precedent reconstructed node continuous to the neighboring node in the reconstruction process, the encoding device may determine that the face vertex is generated also in the current node. As determination that the point cloud surface swells, instead of the sign of the inner product of the vectors described above, the encoding device may actually calculate the volume of the point cloud surface, and determine that the surface swells if the volume increases.

It should be noted that the determination corresponds to the first condition in step S221 illustrated in FIG. 34 and in step S231 illustrated in FIG. 35. Furthermore, here, the example where the encoding device performs determination is described. However, similar determination is performed also in the decoding device.

### [Ordering of vertex group in node]

A plurality of triangles (TriSoup surfaces) are generated in the node for reconstructing the point cloud. In this case, not to fail to develop triangles, the vertex group is required to be sequentially selected from the end. Specifically, the decoding device performs ordering for the edge vertices and the face vertices according to the rotation order centered at the centroid vertex. The decoding device sequentially selects every two points based on the set order, and generates a triangle with three points that are the selected two points and the centroid vertex. Accordingly, triangles can be generated in the node without any gap.

However, the existing method uses the assumption that the ordering target is only edge vertices on the node frames, projects the vertex group from the main axis (any of x, y, and z axes), and successfully achieves ordering by simple sorting. In the present embodiment, the face vertex is generated on the surface of the node. Accordingly, the ordering target is not limited to the node frames (edges), and simple sorting is not achieved.

FIGS. 42 to 46 are diagrams for describing this problem. FIG. 42 is a diagram illustrating an example of the edge vertices and the centroid vertex. FIG. 43 is a diagram illustrating an example of correctly generated triangles. FIG. 44 is a diagram illustrating an example of incorrectly generated triangles.

For example, as shown in the example illustrated in FIG. 42, the edge vertices are ordered. For example, the decoding device projects the edge vertices in the x-axis direction, and performs ordering. Next, as shown in FIG. 43, the decoding device generates each triangle with a combination of the centroid vertex and two edge vertices adjacent to each other. On the other hand, as illustrated in FIG. 44, failed ordering of the edge vertices opens holes in the node.

FIG. 45 is a diagram illustrating an example of the edge vertices, the centroid vertex, and the face vertices. FIG. 46 is a diagram illustrating an example of triangle generation when simple sorting is applied to this case.

For example, in a case of applying simple sorting to the vertex group including the face vertices, ordering illustrated in FIG. 45 is performed. It should be noted that the numerical values in parentheses indicate the order set by the ordering. In this case, holes are formed as illustrated in FIG. 46. In this case, the order of face vertex F2 should be set to (5) but is actually set to (7), which causes formation of the holes.

In contrast, instead of simple sorting, the arctangent (arctan) of each vertex with the viewpoint facing an annular distribution formed by the edge vertices and the face vertices is calculated. Furthermore, to make the viewpoint face the annular distribution, the vertex group is multiplied by a rotation matrix.

FIGS. 47 to 50 are diagrams for describing this process. (A) illustrated in FIG. 47 indicates a normal unit vector of the edge vertex group in the node. (B) indicates a unit vector in the z-axis direction. (C) indicates a rotation axis obtained by an outer product of (A) and (B).

By adjusting the origin of the vertex coordinates to the centroid vertex, and then multiplying the edge vertex and face vertex group by a matrix that rotationally aligns (A) with (B), the annular arrangement of the vertex group faces the z-axis.

The amount of rotation (cosθ, sinθ) is obtained by the inner product of (A) and (B). The rotation axis (C) is obtained from the outer product of (A) and (B).

FIG. 48 is a diagram illustrating an example of each vertex in a state of facing the z-axis after the process described above. The decoding device calculates the arctangent (arctan) from the x and y coordinates of each vertex in the state of facing the z-axis, sorts each vertex, and performs ordering. Thus, the ordering illustrated in FIG. 49 is performed. The decoding device selects every two points from the vertex group including the edge vertices and face vertices according to the order centered at the centroid vertex, and generates each triangle using the selected two points and the centroid vertex. Thus, a plurality of triangles are generated as illustrated in FIG. 50.

It should be noted that in the example described above, the annular distribution faces the viewpoint in the z-axis direction, but the viewpoint may be set in the x-axis direction or the y-axis direction, or another direction.

### [Syntax]

In relation to reduction of the data amount of the bitstream, information to be transferred from the encoding device to the decoding device for face vertex reconstruction is one-bit information (face vertex information) indicating whether to generate a face vertex on each face to which a limitation is provided based on the geometry.

FIG. 51 is a diagram illustrating a syntax example of GDU (geometry_data_unit_data) included in the bitstream. GDU includes octree information, and geometry_trisoup_data. The geometry_trisoup_data includes the number of edges, edge vertex information, the number of edge vertices, edge vertex position information, the number of transfer surfaces, and face vertex information. It should be noted that the octree information, the number of edges, the edge vertex information, the number of edge vertices, and the edge vertex position information are similar to the information items described with reference to FIG. 15.

The number of transfer surfaces indicates the total number of information items (face vertex information) on the surface to be transferred. The face vertex information is provided for each surface. The face vertex information [i] is one-bit information indicating whether to generate a face vertex on the i-th surface (whether a face vertex is present). For example, a value of 0 indicates that no face vertex is generated, and a value of 1 indicates that a face vertex is generated.

Furthermore, the number of transfer surfaces and the face vertex information are included in the bitstream if the face vertex function is valid, and are not included in the bitstream if the face vertex function is invalid. The face vertex function is a process of generating the face vertex described above.

For example, a flag indicating whether the face vertex function is valid or invalid is provided, and based on the flag, it is determined whether the face vertex function is valid or invalid. The flag may be stored in GPS or GDU header, for example.

Furthermore, the validity of the face vertex function may be set for each node. In this case, a plurality of flags corresponding to respective nodes may be stored in the GDU header.

FIG. 52 is a diagram illustrating a variation of the syntax of GDU. The syntax illustrated in FIG. 52 is different from the syntax illustrated in FIG. 51 in that GDU includes face vertex group information instead of the number of transfer surfaces and the face vertex information.

The face vertex group information indicates whether to generate a face vertex on each of surfaces. That is, the face vertex group information is information in which the face vertex information items illustrated in FIG. 51 are combined. Furthermore, the face vertex group information is included in the bitstream if the face vertex function is valid, and is not included in the bitstream if the face vertex function is invalid.

According to the syntax illustrated in FIG. 52, GDU does not include the number of transfer surfaces. Here, node information for applying a limitation based on the geometry to each surface, position information on the edge vertices, and position information on the centroid vertex have already been known to the decoding device. Consequently, the decoding device can calculate the number of information items on the surfaces to be actually transferred (the number of transfer surfaces), by applying the limitation based on the geometry to every surface acquired from the neighboring relationship of the node.

FIG. 53 is a diagram illustrating a variation of the syntax of GDU. The syntax illustrated in FIG. 53 is a syntax example in a case of generating the face vertex at a position deviating from the intersection between the line segment connecting the two centroid vertices and the surface, as described above. In comparison with the syntax illustrated in FIG. 51, in the syntax illustrated in FIG. 53 GDU further includes offset amount (x) and offset amount (y).

Offset amount (x) and offset amount (y) are provided for each face vertex. Offset amount (x) [i] indicates the offset amount of the i-th face vertex in the x-axis direction between the intersection and this face vertex. Offset amount (y) [i] indicates the offset amount of the i-th face vertex in the y-axis direction between the intersection and this face vertex. That is, offset amount (x) and offset amount (y) indicate the two-dimensional offset amount from the intersection to the face vertex.

For example, the encoding device may quantify the two-dimensional offset amount, and then store the quantized amount in the bitstream. In this case, the bitstream includes a quantization parameter used for quantization. The decoding device inversely quantizes the quantized offset amount included in the bitstream using the quantization parameter, and reconstructs the original offset amount.

### [Other]

In the flowchart illustrated in FIG. 35, the decoding device generates the face vertex if the received face vertex information is true, but may generate the face vertex irrespective of the face vertex information. For example, the encoding device need not store the face vertex information in the bitstream, the decoding device may generate the face vertex if the first condition is satisfied, and generate no face vertex if the first condition is not satisfied.

Furthermore, in the flowchart illustrated in FIG. 34, the encoding device determines the value (true or false) of the face vertex information using the first condition and the second condition, but may determine the value of the face vertex information using only one of the first condition and the second condition.

According to the ordering of the vertex group in the node, the rotation axis passing through the centroid vertex is obtained from the outer product of the normal vector of the plane made up of the edge vertex group and any coordinate axis. However, the method of obtaining the rotation axis for ordering the vertex group (edge vertices and face vertices) is not limited thereto. For example, the vertex group may be projected in the direction of any axis passing through the centroid vertex, and the axis direction may be determined such that the minimum value of the distance between the projected point and the axis can be larger than a predetermined value. Alternatively, the axis direction may be determined such that the sum of squares of the distances can be larger than a predetermined value.

In reduction of the data amount of the bitstream, the boolean value (one-bit face vertex information) is transferred. Alternatively, information in another format may be transferred. For example, the face vertex information may indicate three or more values. For example, a value of 0 may indicate "no face vertex is generated", a value of 1 may indicate "a face vertex is generated", and a value of 2 may indicate "a face vertex is generated depending on the capacity of the decoding device". Alternatively, in the case of using a boolean value, if the boolean value is true, the decoding device may determine whether to generate a face vertex depending on the capacity of the decoding device.

### [Conclusion]

As described above, the decoding device (three-dimensional data decoding device) according to the embodiment performs the process illustrated in FIG. 54. The decoding device is a decoding device that decodes three-dimensional points. The decoding device: generating a first vertex (for example, a face vertex) on a first surface of a first node, at a position other than an edge of the first node (S301); generating second vertices (for example, edge vertices) at edges of the first node (S302); generating a third vertex (for example, a centroid vertex) within the first node, based on the second vertices (S303); generating, within the first node, a triangle (for example, a TriSoup surface) defined by the first vertex, a second vertex among the second vertices, and the third vertex (S304); and generating the three-dimensional points on a surface of the triangle (S305).

Accordingly, a decoding device can generate the first vertex at a position other than an edge on a surface of a node, and generate a triangle using the first vertex. Accordingly, since a triangle that passes a position other than the edge of the node can be generated, it is possible to improve the reproducibility of the shape of the original point cloud in the decoded point cloud. Specifically, it is possible to improve the reproducibility of the shape of the original point cloud for a TriSoup scheme in which, other than a centroid vertex, only an edge vertex is provided.

For example, the first surface is a surface common between the first node and a second node adjacent to the first node, and the first vertex represents three-dimensional points located in a vicinity of the first surface in the first node and the second node. Accordingly, by generating a triangle using the first vertex, it is possible to improve the reproducibility of the three-dimensional clouds located in the vicinity of the first surface, in the decoded point cloud.

For example, the first vertex is disposed on the first surface of the first node, based on a position of the third vertex in the first node and a position of a third vertex in a second node adjacent to the first node. Accordingly, for example, the reproducibility of the shape of the original point cloud distributed between two second vertices can be improved.

For example, the first surface is a surface common between the first node and a second node adjacent to the first node, the decoding device further: generates fourth vertices (for example, edge vertices) at edges of the second node; generates a fifth vertex (for example, a centroid vertex) within the second node, based on the fourth vertices, and the first vertex is generated based on information indicating that the third vertex is connected to the fifth vertex. Accordingly, for example, when a ridge line is formed straddling a node boundary, it is possible to improve the reproducibility of the shape of the ridge line in the decoded point cloud.

For example, the first surface is a surface common between the first node and a second node adjacent to the first node, the decoding device further: generates fourth vertices (for example, edge vertices) at edges of the second node; generates a fifth vertex (for example, a centroid vertex) within the second node, based on the fourth vertices, and the first vertex is on a line passing the third vertex and the fifth vertex. Accordingly, for example, when a ridge line is formed straddling a node boundary, it is possible to improve the reproducibility of the shape of the ridge line in the decoded point cloud.

For example, the information is provided for each of three mutually orthogonal surfaces of the first node. Accordingly, it is possible to control whether to generate the first vertex for each surface.

For example, the first vertex is generated based on information provided for each of three mutually orthogonal surfaces of the first node, the information indicating whether a vertex is present at a position other than an edge on the surface. Accordingly, it is possible to control whether to generate the first vertex in three surfaces of a node.

For example, the first vertex is determined based on information indicating that the first vertex is present on at least one surface of the first node. Accordingly, it is possible to control whether to generate the first vertex for each surface of a node.

For example, the decoding device further receives a bitstream including the information. Accordingly, the decoding device can determine whether to generate the first vertex, by using information included in the bitstream. Therefore, since the decoding device does not need to perform the determining based on another condition, etc., the processing amount of the decoding device can be reduced.

For example, the information includes position information of the first vertex. Accordingly, the decoding device can generate the first vertex at any position, based on the information. Accordingly, the degree of freedom for the position at which to generate the first vertex is improved. For example, the information includes vector information indicating a vector from the third vertex to the first vertex. For example, the information indicates a difference (an offset amount) between the position of the first vertex and the intersection of a line passing the third vertex and the fifth vertex and the first surface.

For example, the first vertex represents the three-dimensional points inside the first node and other three-dimensional points inside an other node. Accordingly, the first vertex enables reproduction of, not only the three-dimensional points inside the first node, but also three-dimensional points inside another node. Accordingly, it is possible to improve the reproducibility of the shape of the original point cloud in the decoded point cloud.

For example, the first vertex is located apart from a line connecting two of the second vertices on the first surface, by a predetermined distance or more. Accordingly, a shape that cannot be reproduced using the second vertex can be reproduced using the first vertex. Accordingly, it is possible to improve the reproducibility of the shape of the original point cloud in the decoded point cloud.

For example, the decoding device further receives a bitstream including information indicating, for each surface satisfying a predetermined condition among surfaces of the first node, whether the first vertex is to be generated on the surface. Accordingly, the data amount of information to be stored in the bitstream can be reduced.

For example, the first surface is a surface common between the first node and a second node adjacent to the first node, the decoding device further: generates fourth vertices (for example, edge vertices) at edges of the second node; and generates a fifth vertex (for example, a face vertex) within the second node, based on the fourth vertices, the predetermined condition includes at least one of: a first condition that the surface includes two or three of the second vertices; or a second condition that a first vector (for example, vector Cvec0), a second vector (for example, vector Cvec1), and a third vector (for example, vector NF) face a same direction, the first vector is a vector from a first center of balance of the second vertices to the third vertex, the second vector is a vector from a second center of balance of the fourth vertices to the fifth vertex, and the third vector is a vector from a first line connecting two of the second vertices on the first surface to a tentative first vertex, the tentative first vertex being provided at a position at which a second line connecting the third vertex and the fifth vertex intersects the first surface.

Accordingly, in a case where there is a low possibility that reproducibility will be improved by generating the first vertex, the transfer of information on the first vertex can be omitted.

For example, in the generating of the triangle, the decoding device: performs ordering of the first vertex and the second vertices by calculating arctangents of the first vertex and the second vertices in a state in which a viewpoint is facing an annular distribution including the first vertex and the second vertices; and selects two vertices from among the first vertex and the second vertices based on a result of the ordering, and generates the triangle including the two vertices selected and the third vertex. Accordingly, the decoding device can appropriately generate a triangle in a case where the first vertex is to be used.

FIG. 55 is a block diagram of decoding device 10. For example, decoding device 10 includes processor 11 and memory 12, and processor 11 performs the above-described processes using memory 12.

Furthermore, the encoding device (three-dimensional data encoding device) according to the embodiment performs the process illustrated in FIG. 56. The encoding device encodes three-dimensional points. The encoding device: generates a first vertex (for example, a face vertex) on a first surface of a first node, at a position other than an edge of the first node (S311); generates second vertices (for example, edge vertices) at edges of the first node (S312); generates a third vertex (for example, a centroid vertex) within the first node, based on the second vertices (S313); and stores information on the first vertex, the second vertices, and the third vertex in a bitstream (S314). The first vertex, the second vertices, and the third vertex are generated to generate, within the first node, a triangle defined by the first vertex, a second vertex among the second vertices, and the third vertex, and the three-dimensional points are approximated with the triangle.

Accordingly, for example, the decoding device can generate the first vertex at a position other than an edge on a surface of a node by using information included in the bitstream, and generate a triangle using the first vertex. Accordingly, since a triangle that passes a position other than the edge of the node can be generated, it is possible to improve the reproducibility of the shape of the original point cloud in the decoded point cloud.

For example, the first surface is a surface common between the first node and a second node adjacent to the first node, and the first vertex is generated based on the three-dimensional points inside the first node and three-dimensional points inside the second node. Accordingly, since the first vertex can be generated based on the three-dimensional points inside the first node and the second node, it is possible to improve the reproducibility of the shape of the original point cloud in the decoded point cloud.

For example, the first vertex is generated based on a plane or a curved surface within the first node and a plane or a curved surface within the second node. Accordingly, since the first vertex is generated based on the distribution of three-dimensional points inside the first node and the second node, it is possible to improve the reproducibility of the shape of the original point cloud in the decoded point cloud.

For example, the encoding device further: generates fourth vertices (for example, edge vertices) at edges of the second node; and generates a fifth vertex (for example, a centroid vertex) within the second node, based on the fourth vertices. The generating of the first vertex includes: shifting the plane or the curved surface within the first node toward the third vertex; shifting the plane or the curved surface within the second node toward the fifth vertex; and generating the first vertex based on the plane shifted or the curved surface shifted within the first node and the plane shifted or the curved surface shifted within the second node.

Accordingly, since the first vertex is generated based on the distribution of three-dimensional points inside the first node and the second node, it is possible to improve the reproducibility of the shape of the original point cloud in the decoded point cloud.

For example, the plane shifted or the curved surface shifted within the first node passes the third vertex and the plane shifted or the curved surface shifted within the second node passes the fifth vertex. Accordingly, since the first vertex is generated based on the distribution of three-dimensional points inside the first node and the second node, it is possible to improve the reproducibility of the shape of the original point cloud in the decoded point cloud.

It should be noted that although, in the foregoing embodiment, the feature of generating a vertex on a surface, at a position other than an edge is used in the TriSoup scheme in which a triangle is generated, the feature may be used in another scheme in which a polygon other than a triangle is generated using edge vertices, and a point cloud is decoded on the surface of the polygon.

FIG. 57 is a block diagram of encoding device 20. For example, encoding device 20 includes processor 21 and memory 22, and processor 21 performs the above-described processes using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

### [Industrial Applicability]

The present disclosure is applicable to an encoding device and a decoding device.

### [Reference Signs List]

10 decoding device
11, 21 processor
12, 22 memory
20 encoding device
101 target space
102, 133 point cloud
103, 111, 132 point
104 leaf-node
112 edge vertex
113, 122 range
121 approximate plane
123 vertex information
131 triangle
151 centroid vertex
152 region
161 face vertex

## Claims

1. A decoding method for decoding three-dimensional points, the decoding method comprising:
generating a first vertex on a first surface of a first node, at a position other than an edge of the first node;
generating second vertices at edges of the first node;
generating a third vertex within the first node, based on the second vertices;
generating, within the first node, a triangle defined by the first vertex, a second vertex among the second vertices, and the third vertex; and
generating the three-dimensional points on a surface of the triangle.

2. The decoding method according to claim 1, wherein
the first surface is a surface common between the first node and a second node adjacent to the first node, and
the first vertex represents three-dimensional points located in a vicinity of the first surface in the first node and the second node.

3. The decoding method according to claim 1, wherein
the first vertex is disposed on the first surface of the first node, based on a position of the third vertex in the first node and a position of a third vertex in a second node adjacent to the first node.

4. The decoding method according to claim 1, wherein
the first surface is a surface common between the first node and a second node adjacent to the first node,
the decoding method further comprises:
generating fourth vertices at edges of the second node;
generating a fifth vertex within the second node, based on the fourth vertices, and
the first vertex is generated based on information indicating that the third vertex is connected to the fifth vertex.

5. The decoding method according to claim 4, wherein
the information is provided for each of three mutually orthogonal surfaces of the first node.

6. The decoding method according to claim 1, wherein
the first vertex is generated based on information provided for each of three mutually orthogonal surfaces of the first node, the information indicating whether a vertex is present at a position other than an edge on the surface.

7. The decoding method according to claim 4 or 6, further comprising:
receiving a bitstream including the information.

8. The decoding method according to claim 4 or 6, wherein
the information includes position information of the first vertex.

9. The decoding method according to claim 1, wherein
the first vertex represents the three-dimensional points inside the first node and other three-dimensional points inside an other node.

10. The decoding method according to claim 1, wherein
the first vertex is located apart from a line connecting two of the second vertices on the first surface, by a predetermined distance or more.

11. The decoding method according to claim 1, further comprising:
receiving a bitstream including information indicating, for each surface satisfying a predetermined condition among surfaces of the first node, whether the first vertex is to be generated on the surface.

12. The decoding method according to claim 11, wherein
the first surface is a surface common between the first node and a second node adjacent to the first node,
the decoding method further comprises:
generating fourth vertices at edges of the second node; and
generating a fifth vertex within the second node, based on the fourth vertices,
the predetermined condition includes at least one of:
a first condition that the surface includes two or three of the second vertices; or
a second condition that a first vector, a second vector, and a third vector face a same direction,
the first vector is a vector from a first center of balance of the second vertices to the third vertex,
the second vector is a vector from a second center of balance of the fourth vertices to the fifth vertex, and
the third vector is a vector from a first line connecting two of the second vertices on the first surface to a tentative first vertex, the tentative first vertex being provided at a position at which a second line connecting the third vertex and the fifth vertex intersects the first surface.

13. The decoding method according to claim 1, wherein
the generating of the triangle includes:
ordering the first vertex and the second vertices by calculating arctangents of the first vertex and the second vertices in a state in which a viewpoint is facing an annular distribution including the first vertex and the second vertices; and
selecting two vertices from among the first vertex and the second vertices based on a result of the ordering, and generating the triangle including the two vertices selected and the third vertex.

14. An encoding method for encoding three-dimensional points, the encoding method comprising:
generating a first vertex on a first surface of a first node, at a position other than an edge of the first node;
generating second vertices at edges of the first node;
generating a third vertex within the first node, based on the second vertices; and
storing information on the first vertex, the second vertices, and the third vertex in a bitstream, wherein
the first vertex, the second vertices, and the third vertex are generated to generate, within the first node, a triangle defined by the first vertex, a second vertex among the second vertices, and the third vertex, and
the three-dimensional points are approximated with the triangle.

15. The encoding method according to claim 14, wherein
the first surface is a surface common between the first node and a second node adjacent to the first node, and
the first vertex is generated based on the three-dimensional points inside the first node and three-dimensional points inside the second node.

16. The encoding method according to claim 15, wherein
the first vertex is generated based on a plane or a curved surface within the first node and a plane or a curved surface within the second node.

17. The encoding method according to claim 16, further comprising:
generating fourth vertices at edges of the second node; and
generating a fifth vertex within the second node, based on the fourth vertices, wherein
the generating of the first vertex includes:
shifting the plane or the curved surface within the first node toward the third vertex;
shifting the plane or the curved surface within the second node toward the fifth vertex; and
generating the first vertex based on the plane shifted or the curved surface shifted within the first node and the plane shifted or the curved surface shifted within the second node.

18. The encoding method according to claim 17, wherein
the plane shifted or the curved surface shifted within the first node passes the third vertex, and the plane shifted or the curved surface shifted within the second node passes the fifth vertex.

19. A decoding device that decodes three-dimensional points, the decoding device comprising:
a processor; and
memory, wherein
using the memory, the processor:
generates a first vertex on a first surface of a first node, at a position other than an edge of the first node;
generates second vertices at edges of the first node;
generates a third vertex within the first node, based on the second vertices;
generates, within the first node, a triangle defined by the first vertex, a second vertex among the second vertices, and the third vertex; and
generates the three-dimensional points on a surface of the triangle.

20. An encoding device that encodes three-dimensional points, the encoding device comprising:
a processor; and
memory, wherein
using the memory, the processor:
generates a first vertex on a first surface of a first node, at a position other than an edge of the first node;
generates second vertices at edges of the first node;
generates a third vertex within the first node, based on the second vertices; and
stores information on the first vertex, the second vertices, and the third vertex in a bitstream,
the first vertex, the second vertices, and the third vertex are generated to generate, within the first node, a triangle defined by the first vertex, a second vertex among the second vertices, and the third vertex, and
the three-dimensional points are approximated with the triangle.
